# EUROPEAN PATENT SPECIFICATION

(11) **EP 3 326 080 B1**
(45) Date of publication and mention of the grant of the patent: **21.10.2020**
(21) Application number: 16828687.0
(22) Date of filing: 25.07.2016
(51) Int. Cl.: H05B 47/105, H05B 47/11, H05B 47/19

(54) **INTELLIGENT LIGHTING SYSTEMS AND METHODS FOR MONITORING, ANALYSIS, AND AUTOMATION OF THE BUILT ENVIRONMENT**
INTELLIGENTE BELEUCHTUNGSSYSTEME UND VERFAHREN ZUR ÜBERWACHUNG, ANALYSE UND AUTOMATION DER BEBAUTEN UMGEBUNG
SYSTÈMES ET PROCÉDÉS D'ÉCLAIRAGE INTELLIGENT POUR LA SURVEILLANCE, L'ANALYSE ET L'AUTOMATION DE L'ENVIRONNEMENT BÂTI

(30) Priority: 23.07.2015 US 201562196225 P; 05.04.2016 US 201662318318 P; 16.06.2016 US 201662350948 P; 03.06.2016 US 201662345380 P
(43) Date of publication of application: 30.05.2018
(73) Proprietor: Digital Lumens Incorporated, Boston, Massachusetts 02210 (US)
(72) Inventor: CHEMEL, Brian J., Marblehead, Massachusetts 01945 (US)
(74) Representative: Viering, Jentschura & Partner mbB Patent- und Rechtsanwälte
(86) International application number: PCT/US2016/043893
(87) International publication number: WO 2017/015664

(56) References cited:
- WO-A1-2012/137046
- WO-A1-2013/067389
- US-A1- 2008 001 071
- US-A1- 2011 215 736
- US-A1- 2012 143 357
- US-A1- 2012 235 579
- US-B2- 8 543 249

## Description

### CROSS-REFERENCE TO RELATED APPLICATIONS

This application claims a priority benefit of U.S. Provisional Patent Application No. 62/196,225, filed on July 23, 2015, and entitled "Intelligent Lighting Systems for Monitoring the Built Environment," U.S. Provisional Patent Application No. 62/318,318, filed on April 5, 2016, and entitled "Intelligent Lighting and Building Automation," and U.S. Provisional Patent Application No. 62/350,948, filed on June 16, 2016, and entitled "Systems, Apparatus, and Methods for Automation and Machine Learning".

### TECHNICAL FIELD

The present disclosure relates generally to systems, apparatus, and methods for monitoring, analyzing, and automating aspects of the built environment. More specifically, the present disclosure relates to systems, apparatus, and methods for using existing lighting infrastructure and networks to integrate the physical world with computer-based systems and networks to more efficiently and accurately perform monitoring, analysis, and automation in the built environment.

### BACKGROUND

Over the past several years, intelligent lighting systems combining light sources (e.g., solid state), sensors, networks, and autonomous control have grown in popularity as the prices of solid-state lighting devices have fallen and their efficacy has increased. However, the core functionality of these systems has generally been focused on two areas - energy management and lighting control.

US 8 543 249 B2 describes a method and system for designing improved intelligent, LED-based lighting systems. The LED based lighting systems may include fixtures with one or more of rotatable LED light bars, integrated sensors, onboard intelligence to receive signals from the LED light bars and control the LED light bars, and a mesh network connectivity to other fixtures.

### SUMMARY

As the costs of sensing, networking, and autonomous control also drop, intelligent lighting systems and/or networks may become the Trojan horse that brings the Internet of Things (IoT) to the built environment, thereby integrating the physical world with computer-based systems and networks for improved efficiency, accuracy, and economic benefit.

The IoT may include one or more networks of uniquely identifiable physical things (e.g., wearable objects, vehicles, buildings, etc.), each thing embedded with one or more of hardware, software, a sensor, an actuator, and a network connectivity that enables the thing to collect data and interoperate (e.g., exchange data and instructions) within the existing network infrastructure (e.g., the Internet). This interconnection of devices, systems, and services may lead to automation covering a variety of protocols, domains, and applications (e.g., a smart grid, a smart home, smart transportation, and even a smart city) as well as generation of large amounts of diverse types of data.

The built environment may include, for example, manmade surroundings and supporting infrastructure that provide the settings for human activity. In the built environment, intelligent lighting systems and/or networks have a few key features making them particularly well-suited for automation and data generation, namely ubiquity, power, sensing, and networking. First, artificial lighting is already ubiquitous in the built environment, including indoor and outdoor fixtures for general, accent, and task lighting (e.g., streetlamps, decorative holiday lights, and under-cabinet lighting). Not only are lighting fixtures all around us, but lighting fixtures also are directly connected to existing energy infrastructure. For at least solid-state lighting fixtures, auxiliary power may be diverted to other sensing, networking, and control devices without the added expense of making space and/or installing new connections (e.g., wiring). Furthermore, real-time connections (wired or wireless) to local and wide area networks allow intelligent lighting systems to provide a platform for integration with other devices, systems, and services. The range of sensor types and the granularity of sensor deployment may enable generation of a stream of data about the built environment that can be used for other purposes.

In one embodiment, a system to monitor an environment includes the features according to claim 1. Additional features for advantageous embodiments thereto are recited in the dependent claims.

In another embodiment, a method for monitoring an environment includes the features according to claim 12. Additional features for advantageous embodiments thereto are recited in the dependent claims.

It should be appreciated that all combinations of the foregoing concepts and additional concepts discussed in greater detail below (provided such concepts are not mutually inconsistent) are contemplated as being part of the inventive subject matter disclosed herein. In particular, all combinations of claimed subject matter appearing at the end of this disclosure are contemplated as being part of the inventive subject matter disclosed herein. It should also be appreciated that terminology explicitly employed herein should be accorded a meaning most consistent with the particular concepts disclosed herein.

### BRIEF DESCRIPTION OF THE DRAWINGS

The skilled artisan will understand that the drawings primarily are for illustrative purposes and are not intended to limit the scope of the inventive subject matter described herein. The drawings are not necessarily to scale; in some instances, various aspects of the inventive subject matter disclosed herein may be shown exaggerated or enlarged in the drawings to facilitate an understanding of different features. In the drawings, like reference characters generally refer to like features (e.g., functionally similar and/or structurally similar elements).
FIG. 1A is a diagram illustrating a typical building automation system, FIG. 1B is a diagram illustrating architectures of a building automation system with an intelligent lighting system, and FIG. 1C is a diagram illustrating an architecture of an intelligent lighting system-based platform in accordance with some embodiments.
FIG. 2 is a plot of energy consumption over a twenty-four hour period comparing energy savings following an upgrade to solid state lighting with a further upgrade to an intelligent lighting system-based platform in accordance with some embodiments.
FIG. 3 is a diagram illustrating an architecture of an intelligent lighting system-based platform in accordance with some embodiments.
FIG. 4 is a diagram illustrating an intelligent lighting system-based platform deployed in accordance with some embodiments.
FIG. 5 is a schematic view illustrating an intelligent lighting system-based platform in accordance with some embodiments.
FIG. 6 is a diagram illustrating components of an intelligent lighting system-based platform in accordance with some embodiments.
FIG. 7 is a diagram illustrating an architecture of a sensor network in accordance with some embodiments.
FIGS. 8A and 8B are graphics illustrating visualization techniques enabled by an intelligent lighting system-based platform in accordance with some embodiments.
FIGS. 9A and 9B are screenshots from mobile computing devices illustrating user interfaces with an intelligent lighting system-based platform in accordance with some embodiments.
FIGS. 10A and 10B are graphs of occupancy data in accordance with some embodiments.
FIGS. 11A and 11B are plots of raw occupancy data in accordance with some embodiments.
FIG. 12 is a display screenshot illustrating suspicious activity in accordance with some embodiments.
FIG. 13 is a diagram illustrating calendared room utilization versus actual room utilization.
FIG. 14 is a diagram of ambient temperatures in accordance with some embodiments.
FIGS. 15-20 are display screenshots illustrating various reports enabled by an intelligent lighting system-based platform in accordance with some embodiments.

### DETAILED DESCRIPTION

The present disclosure describes systems, apparatus, and methods for monitoring, analyzing, and automating aspects of the built environment, including the appropriation of existing lighting infrastructure and networks to integrate the physical world with computer-based systems and networks for improved efficiency, accuracy, and economic benefit.

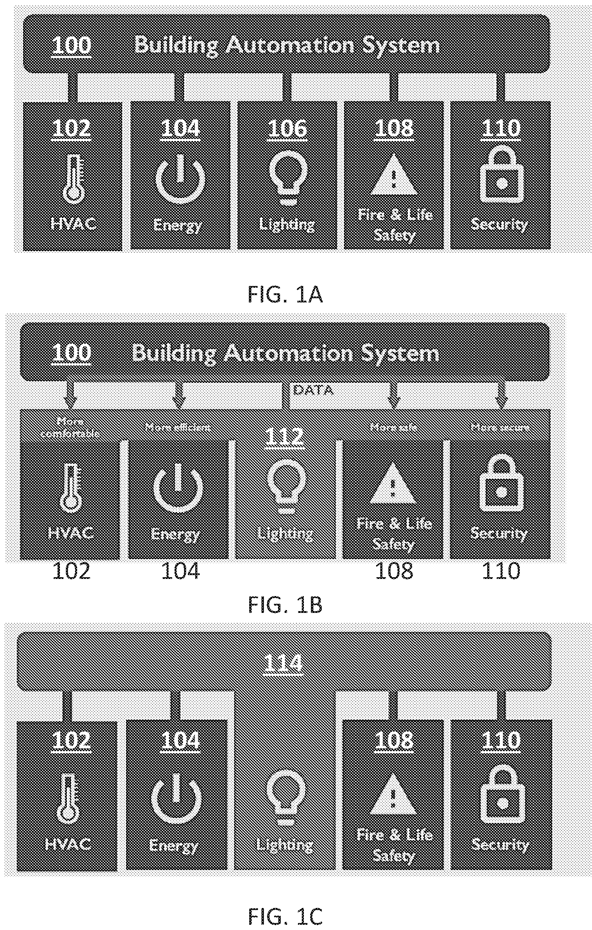

Most modern building automation systems tend to have a similar architecture no matter the vendor. In most cases, this consists of a common network backbone (also known as a "primary bus"), with modules or subsystems corresponding to specific building systems. As shown in FIG. 1A, a typical building automation system has a common connectivity and automation layer 100 with modules for common building systems, including a heating, ventilating, and air conditioning (HVAC) system 102, an energy system 104, a lighting system 106, a fire and life safety system 108, and a security system 110.

Intelligent lighting systems leverage the ubiquity of lights in the built environment to deploy a pervasive network of sensors and controls throughout a wide variety of buildings and public spaces. The data that these systems may generate - occupancy, temperature, energy, asset tracking, ambient light, among other types - may be used to improve the operation of non-lighting building automation subsystems. For example, real-time data about where people are in a facility can be used to make HVAC systems more comfortable and more efficient, for instance, by increasing cooling power in a crowded conference room or by automatically modifying temperature set points in an empty office.

In some embodiments, intelligent lighting networks may be used a backbone for connecting various pieces of building automation equipment, which might otherwise not be cost-effective to deploy because of the expense of connecting them to the Internet. For example, in the event of an emergency, intelligent lighting systems may provide real-time data to fire and life safety systems about where people are located in a building in order to streamline evacuation. Real-time feeds of occupancy data from an intelligent lighting system may make security systems more reliable and effective, by dramatically expanding sensor coverage while automatically ignoring false alarms.

FIG. 1B illustrates how data from an intelligent lighting system 112 may be utilized to improve the operation of other building systems, that is, making the building more comfortable, more efficient, more safe, and more secure. FIG. 1C illustrates an intelligent lighting system as the platform 114 upon which other common building systems communicate and are managed. Platform 114 could provide power and network connectivity to other systems and could pay for itself in energy savings.

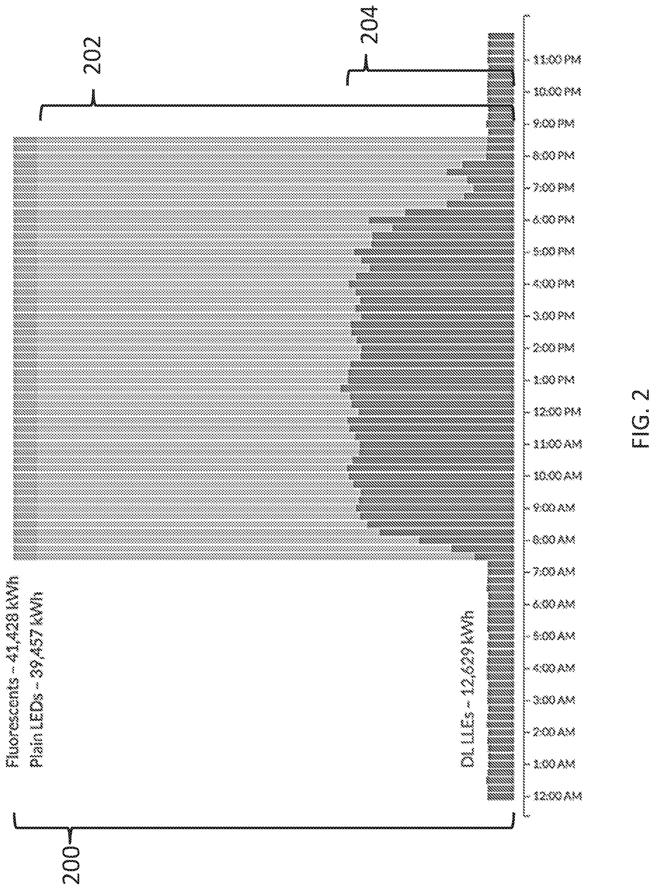

FIG. 2 is a plot of energy consumption over a twenty-four hour period comparing energy savings following an upgrade to solid state lighting with an intelligent lighting system-based platform in accordance with some embodiments. Instead of electrical filaments, plasma, or gas, solid state light sources may include semiconductor light-emitting diodes (LEDs). The energy consumption of non-LED light sources 200 and the energy consumption of LED light sources 202 were observed for a span of twenty-four hours in an environment (e.g., an office space, a warehouse, an airport terminal, a train station, or public space) under a set of controlled conditions. The difference in energy consumption was substantial (e.g., 1,971 fewer kWh). However, the further upgrade to an intelligent lighting system in accordance with some embodiments resulted in a drastic decrease (i.e., 26,828 fewer kWh) in energy consumption 204 in the same environment under the same set of controlled conditions. This savings in energy may be repurposed to further support an intelligent lighting system-based platform, including, for example, solid-state lighting fixtures connected to sensors and control devices for monitoring, analyzing, and/or automating aspects of the built environment without the added expense of making space for additional devices or providing additional electrical and network connectivity.

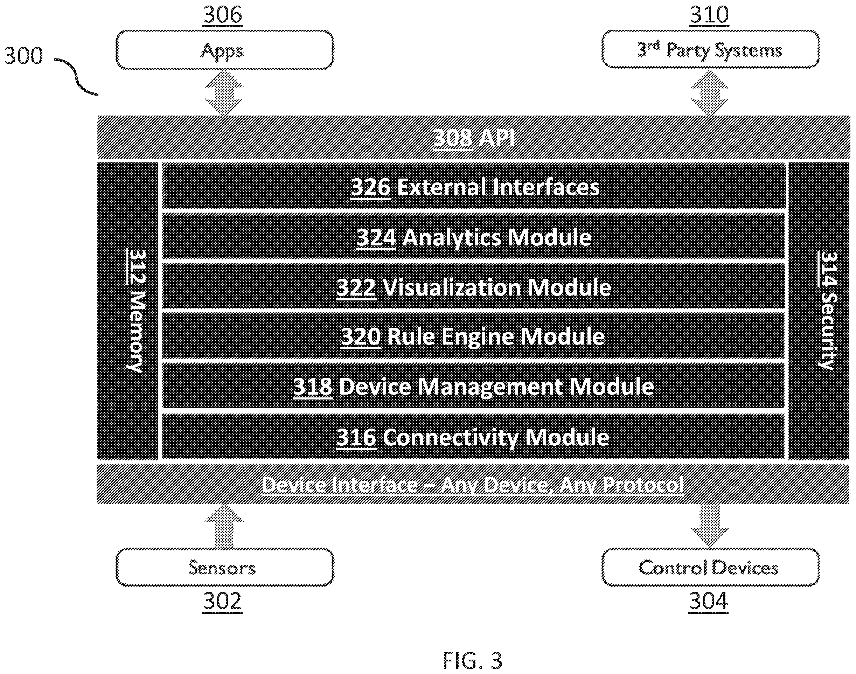

FIG. 3 is a diagram illustrating an architecture of an intelligent lighting system-based platform in accordance with some embodiments. The architecture of platform 300 may be software and/or hardware and interfaced with one or more devices or systems with one or more protocols as described further herein. One or more sensors 302 may be directly or ultimately in communication with the platform 300 for providing sensor input to platform 300. Platform 300 may be directly or ultimately in communication with one or more control devices 304 to provide control signals to control one or more systems in an environment, such as HVAC, energy, lighting, fire and life safety, and security.

Applications or apps 306 may be communicatively connected with platform 300 over at least one application program interface (API) 308 to provide a user with information and to receive user input. An API 308 includes a set of requirements governing how a particular app 306 can communicate and interact with platform 300, including routine definitions, protocols, and tools. An API may be an open API, that is, publicly available and providing developers with programmatic access to certain functions of platform 300.

Apps 306 may be stored locally or remotely on a server or downloaded to one or more personal computing devices, such as a desktop computer, laptop, tablet, smartphone, etc. Similarly, platform 300 may be communicatively connected with one or more third party systems 310 over the API 308 to provide output and receive input regarding various aspects of an environment related to a third party, such HVAC performance in the environment managed by a repair and maintenance service, energy efficiency in the environment related to an energy provider, and suspicious changes in the environment subject to a security or law enforcement agency.

In addition to data storage 312 and security features 314, the architecture of an intelligent lighting system-based platform 300 may include a connectivity module 316 that functions to bolster reliable and real-time communication over a variety of physical layers. The physical layers may include hardware, such as sensors 302, control devices 304, and interfaces for communicating with apps 306. The connectivity module 316 may manage and/or provide connectivity between these physical layers. A device management module 318 may manage and/or provide for commissioning devices, over-the air firmware upgrades, and/or system health metrics. A rule engine module 320 may manage and/or provide real-time behavioral control of the platform 300, sensors 302, control devices 304, and/or communications to apps 306 or third party systems 310. A visualization module 322 may manage and/or provide graphical representation of data collected from the sensors, examples of which are further described herein.

An analytics module 324 may manage and/or provide machine learning algorithms to generate actionable insights based on changes (or the absence of expected changes) sensed in the environment. Actionable insights may include generating a security alert based on the detection of suspicious activity or the presence (or absence) of changes in the environment, generating an inventory report based on tracking particular objects in a warehouse, scheduling use of particular spaces for activities or objects based on analyses of space utilization in an office or factory. Examples of techniques employing machine learning algorithms are further described herein. An external interfaces module 326 may manage and/or provide integration with other systems, for example, using APIs.

According to some embodiments, data storage 312 may include one or more memory devices in communication with the connectivity module 316, the device management module 318, the rule engine module 320, the visualization module 322, the analytics module 324, and/or the external interfaces module 326. For example, stored data may include rules used by the rule engine module 320 for real-time behavioral control, sensor data used by the visualization module 322 to generate graphical reports, and/or actionable insights generated and tested by the analytics module 324. The modules described above may be implemented using hardware, software, and/or a combination thereof.

Platform management resources may be deployed locally or remotely (e.g., via cloud computing) to manage at least one platform servicing at least one environment. Platform management resources may be configured for, but are not limited to, data storage, connectivity, device management, rule management, visualization, analytics, and/or external interfaces.

Intelligent lighting systems may require network infrastructure to function, but this infrastructure may take different forms based on the requirements of specific applications and end users. In some embodiments, the network infrastructure may include a standalone network. In this network an intelligent lighting system may have its own separate data infrastructure. This may enhance security, reduce costs, and provide better convenience. In some embodiments, the network infrastructure may include a facility local area network (LAN). In this network an intelligent lighting system may piggyback on existing facility LAN directly or via a virtual LAN (VLAN). This may reduce costs and provide better manageability. In some embodiments, the network infrastructure may include a cellular network. In this network an intelligent lighting system may provide its own cellular or wireless wide area network (WAN) backhaul connection to obviate the need to connect to facility network altogether.

In some embodiments, intelligent lighting systems may require software deployment to function. The deployment may be on-premise deployment, off-site deployment, or a combination thereof based on the requirements of specific applications and end users. In some embodiments, software deployment may include on-premise deployment. The software may be installed on an appliance and/or an end-user server. In some embodiments, the software deployment may include off-site deployment. The software may be hosted off-site and/or virtualized on a private or public cloud.

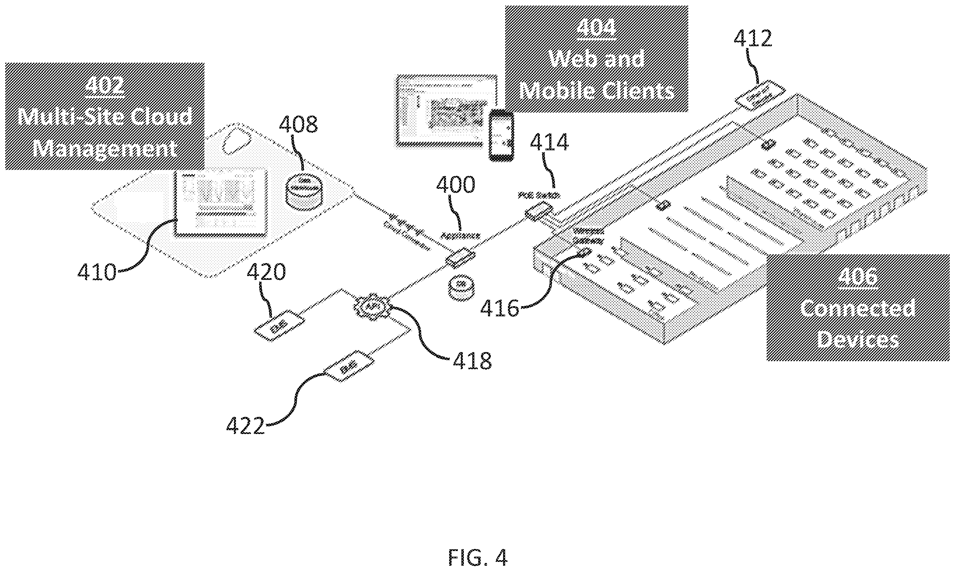

FIG. 4 is a diagram illustrating an intelligent lighting system-based platform deployed in accordance with some embodiments. In FIG. 4, platform appliance 400 is operably connected to multi-site cloud management 402, web and mobile clients 404, and connected devices 406. In FIG. 4, multi-site cloud management 402 includes at least one database 408 for storing data and resources for generating analytics and/or representations thereof (e.g., screenshot 410). In some embodiments, an intelligent lighting system-based platform may include or connect to a plurality of management systems deployed on premise, off premise, or a combination thereof.

In some embodiments, web and mobile clients 404 interact with multi-site cloud management 402 and/or connected devices 406. Web and mobile clients may include facility-level computing infrastructure provided for an environment and/or personal computing devices, such as a desktop computer, laptop, tablet, smartphone, etc. In some embodiments, web and mobile clients may be used to interface with platform appliance 400 by, for example, displaying the results of sensor data processed by management 402.

In some embodiments, platform appliance 400 communicates with connected devices 406, which may include one or more sensors, control devices, power sources, and/or other IoT devices 412. One or more connected devices may be connected to platform appliance 400 with a Power over Ethernet (PoE) switch 414, which allows network cables to carry electrical power to the connected devices 406, and/or a wireless gateway 416, which routes information from a wireless network to another wired or wireless network. Platform appliance 400 also may communicate over an API 418 with an energy monitoring system (EMS) 420, which monitors and reports energy data to support decision making, and/or a building management system (BMS) 422, which controls and monitors a building's mechanical and electrical equipment (e.g., ventilation, lighting, power, and fire and security equipment).

The multi-tier architecture comprising multi-site cloud management 402, web and mobile clients 404 and connected devices 406 may enable distribution of the processing load, thereby providing flexibility to work with a range of customer sizes and respective IT requirements (e.g., an individual facility or facilities of a multi-national corporation).

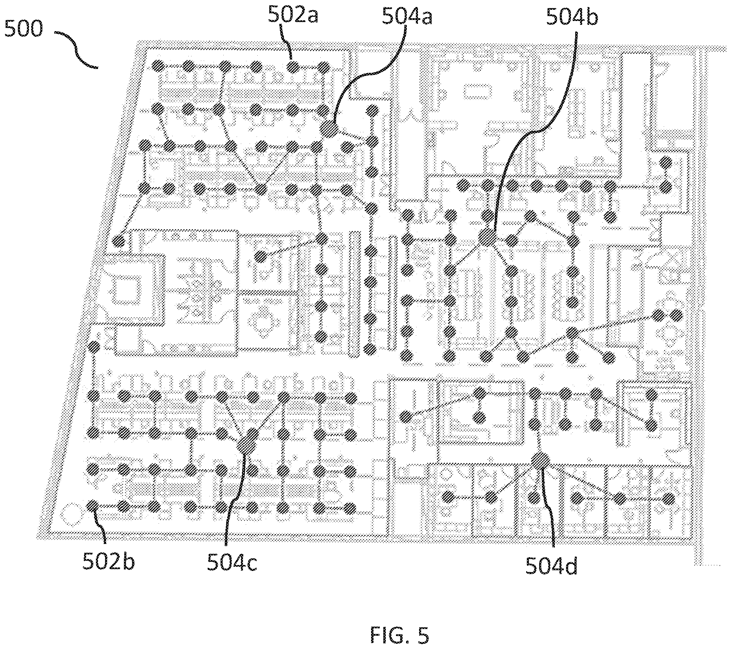

FIG. 5 is a schematic view illustrating an intelligent lighting system-based platform in accordance with some embodiments. The schematic is overlaid on a floorplan 500 of, for example, a typical office environment. A plurality of intelligent lighting fixtures (e.g., luminaires) 502, such as individual fixtures 502a and 502b, are represented by smaller nodes in in FIG. 5. Meanwhile, a plurality of gateways 504, including individual gateways 504a, 504b, 504c, and 504d, are represented by larger nodes in FIG. 5. The dashed lines connecting each of the fixtures 502 to at least one other fixture and/or a gateway represent the interconnections between these devices. The number of fixtures and/or gateways may vary depending on the intended use, existing structures, the network topology, and other details of an environment.

The overlay of nodes and connections may represent a physical topology including device location and cable installation (i.e., the actual physical connections between devices unless wirelessly connected) and/or a logical topology describing the routes data takes between nodes. In FIG. 5, the overlay represents a wireless mesh routing topology in the office in accordance with some embodiments. However, an intelligent lighting system-based platform may be physically and/or logically mapped as a point-to-point network, a bus network, a star network, a ring network, a mesh network, a tree network, a hybrid network, or a daisy chain network.

One or more of intelligent lighting fixtures in an environment may be connected with one or more control devices and/or sensors distributed throughout the environment in accordance with some embodiments. The connection between a lighting fixture and a control device or sensor may be mechanical, electrical, and/or network-based. For example, a microphone may be mechanically connected to a lighting fixture via a shared housing or a physical attachment to the fixture housing. The microphone may be electrically connected to the fixture by sharing a power source, and/or communicatively connected to the fixture by sharing a network and/or communication interface.

In some embodiments, an intelligent lighting system-based platform provides a network and connectivity between a plurality of sensors. Accordingly, the overlay in FIG. 5 could represent a wireless mesh network of sensors distributed throughout the office in accordance with some embodiments. For example, each fixture could include a microphone to capture changes in sound within different parts of the office. Thus, an intelligent lighting system-based platform hosting a plurality of microphones, for example, may enable numerous applications including tracking people (e.g., voice movement, voice identification, etc.), generating insights into how the office is used (e.g., meeting places versus quiet work spaces, etc.), and monitoring and securing the office (e.g., decibel levels, voice recognition, etc.).

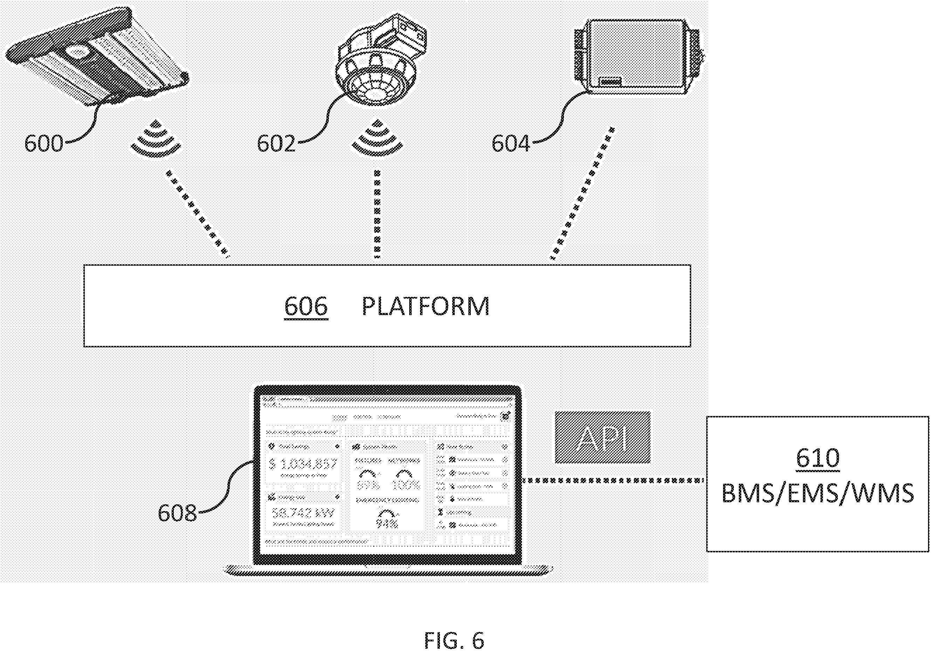

FIG. 6 is a diagram illustrating components of an intelligent lighting system-based platform in accordance with some embodiments. In FIG. 6, a lighting fixture 600, a sensor 602, and a wireless gateway 604 are positioned in an environment. These devices may or may not be connected mechanically and/or electrically. Lighting fixture 600 and sensor 602 may be wirelessly integrated with platform 606, which in turn, is in communication with a web and/or mobile computing device 608 so that a user may interface with platform 606 software and/or hardware by, for example, displaying the results of sensor data processed by platform 606. Platform 606 may communicate with other connected devices, such as additional lighting fixtures, sensors, control devices, power sources, and/or other IoT devices. For example, platform 606 is connected to wireless gateway 604, which routes information from the wireless network to another wired or wireless network. Platform 606 also may communicate over an API with an external management system 610, such as an EMS, a BMS, or a workflow management system (WMS), which provides an infrastructure for the set-up, performance, and monitoring of a defined sequence of tasks arranged as a workflow.

In some embodiments, sensor 602 may perform occupancy sensing such that platform 606 controls lighting fixture 600 to provides light as needed based on the occupancy of a space. In some embodiments, sensor 602 may perform ambient light sensing such that platform 606 controls lighting fixture 600 to adjust light level accordingly (i.e., daylight harvesting). Lighting fixture 600 may be configured for full-range dimming for optimal energy saving and/or visual comfort. Sensor 602 may include an on-board power meter to measure and/or validate energy used by lighting fixture 600. Platform 606 may process data (e.g., occupancy, ambient light, energy usage, etc.) from sensor 602 to generate reports and/or optimize operations within the space. Device 608, which displays an energy usage report, may be interfaced with external management system 610 to implement optimizations generated by platform 606.

In some embodiments, a sensor network is installed via installation of lighting fixtures with integrated sensors, installation of a control device to connect sensors with existing lighting fixtures, or some combination thereof. In some embodiments, the installed network is connected to the platform, resulting in one or more of integration of the sensors with an intelligent lighting system platform, occupancy sensing to provide light when and where needed, daylight harvesting to adjust light levels based on ambient light, full-range dimming for visual comfort and optimal savings, and on-board power metering for measuring and validating energy use. In some embodiments, the platform provides reports and/or automatically adjusts operations for optimization.

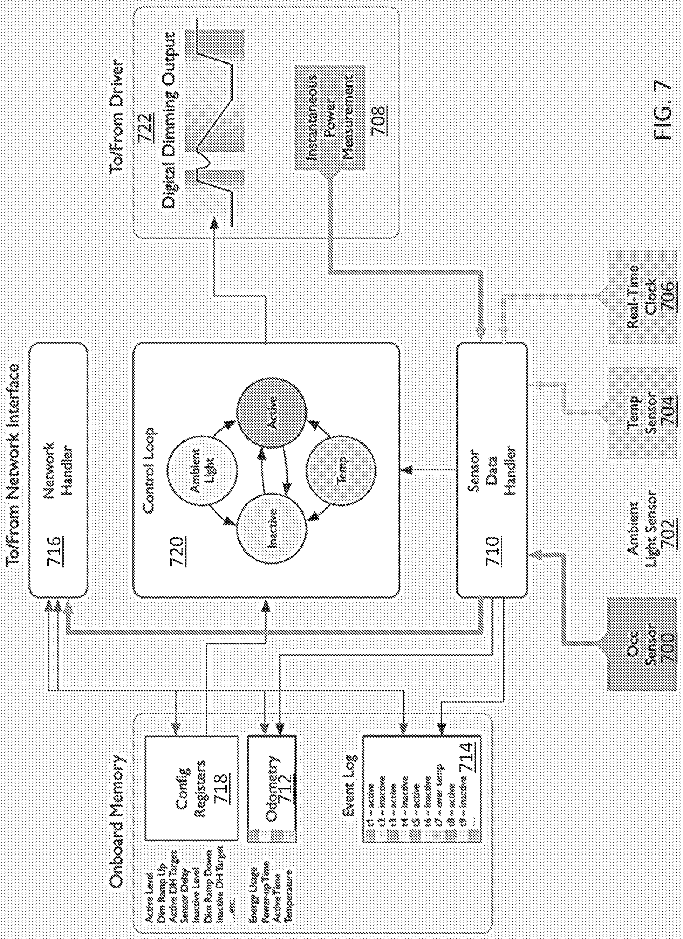

FIG. 7 is a diagram illustrating an architecture of a sensor network enabled by an intelligent lighting system platform in accordance with some embodiments. A plurality of different types of sensors may be included. For example, at least one of occupancy sensor 700, ambient light sensor 702, temperature sensor 704, and clock 706 (e.g., a real-time clock) may be located in an environment. At least one sensor for instantaneous power management 708 may be located within or electrically connected to at least one driver. Data from these sensors may be collected by at least one sensor data handler 710.

Sensor data may be sent to an odometry module 712 stored, for example, in onboard memory or at least one remote memory device. Odometry module 712 may use the collected data to compute a plurality of parameters, such as energy usage, power up time, active time, and temperature. Sensor data may be sent to at least one event log 714 stored, for example, in onboard memory or at least one remote memory device. Events may be time-stamped (e.g., based on clock 706) and/or location-stamped (e.g., based on the position of a source sensor and/or the odometry module 712). Event records may include activity or inactivity statuses for at least one sensor as well as deviations from, for example, a range or threshold (e.g., a temperature above an expected threshold).

According to some embodiments, sensor data may be sent from at least one sensor data handler 710 to at least one network handler 716, which may provide feedback to odometry module 712, event log 714, and/or at least one configuration register 718, which controls aspects of the system such as an active level of ambient light, an inactive level of ambient light, a dimming ramp up period, a dimming ramp down period, an active power usage target, an inactive power usage target, a sensor delay, etc.

In particular, control loop 720 controls connected devices (e.g., lighting, HVAC, etc.) based on configurations stored in configuration register 718 and sensor data from sensor data handler 710. For example, control loop 720 may receive sensor data indicating active occupancy, a measured ambient temperature, and a measured ambient light level. Based on this input, control loop 720 may compare the measured ambient temperature and measured ambient light level to configurations defining an active target temperature and an active target light level. If the sensor data indicates inactivity, control loop 720 may compare the measured ambient temperature and measured ambient light level to different configurations defining an inactive target temperature and an inactive target light level. If sensor data does not meet one or more configurations, control loop 720 may activate at least one driver 722 to adjust connected devices. For example, too much power usage may be corrected with a control signal to dim one or more connected lighting fixtures (e.g., as shown in FIG. 7), or a lower than desired temperature may be corrected with a control signal to adjust one or more connected thermostats. Changes by a driver may be measured using a for instantaneous power measurement 708.

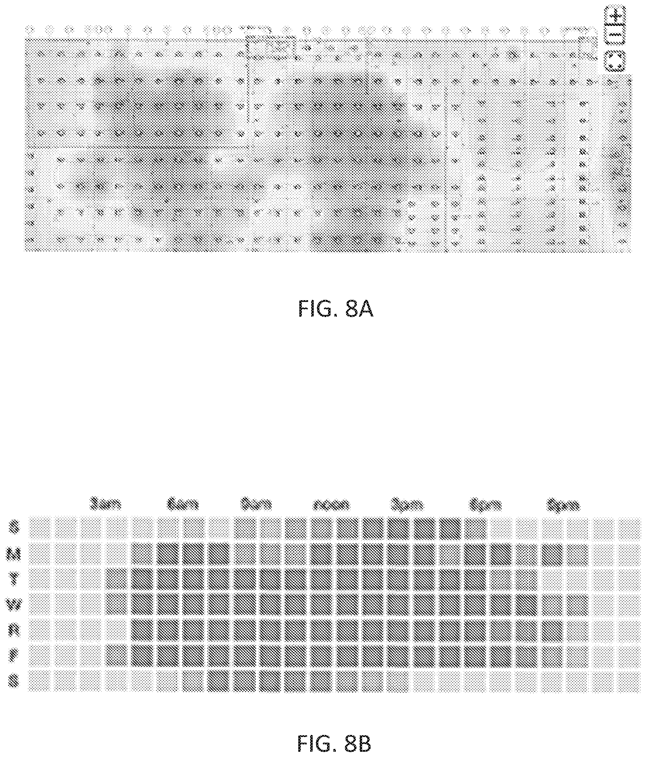

FIGS. 8A and 8B are graphics illustrating visualization techniques enabled by an intelligent lighting system-based platform in accordance with some embodiments. In FIG. 8A, conditions in an environment are represented as a map of sensor data captured at an instant in time or collected over a period of time to visualize conditions spatially across the environment. For example, the map may be a heat map generated from data collected by temperature sensors, a lighting map generated from data collected by ambient light sensors, or an occupancy map generated from data collected by occupancy sensors. In some embodiments, a representation may cover environments of various sizes, including, for example, at least one of a room, a suite, a floor, a facility, a compound, a neighborhood, a town, etc. In FIG. 8B, conditions in an environment are represented as a week grid of sensor data captured in one position or collected across the environment to visualize conditions over the span of a week. In particular, the week grid displays data obtained from sensors for a range of time for each day of the week. In some embodiments, a representation may cover various time periods, including, for example, at least one of an hour, a shift, a day, a work week, a calendar week, a month, a season, a year, etc.

In some embodiments, the spatial density of, for example, occupancy sensing built into intelligent lighting systems (e.g., a sensor built into every single light fixture) makes lighting a particularly useful platform on top of which to build other systems. For example, the platform may be integrated with building management systems, including legacy protocols and special-purpose protocols.

According to some embodiments, one or more APIs may be provided for communication and/or interaction between the platform and users. For example, an API may be for mobile apps and/or web apps. An API may be a closed API for in-house development or an open API, that is, publicly available and providing developers with programmatic access to certain functions of platform. The API may limit access rights and/or require user authorization. The API may provide information in real time and/or buffered. In some embodiments, an API provides alerts and/or reports. The API may provide historical information, current information, and/or predictive information.

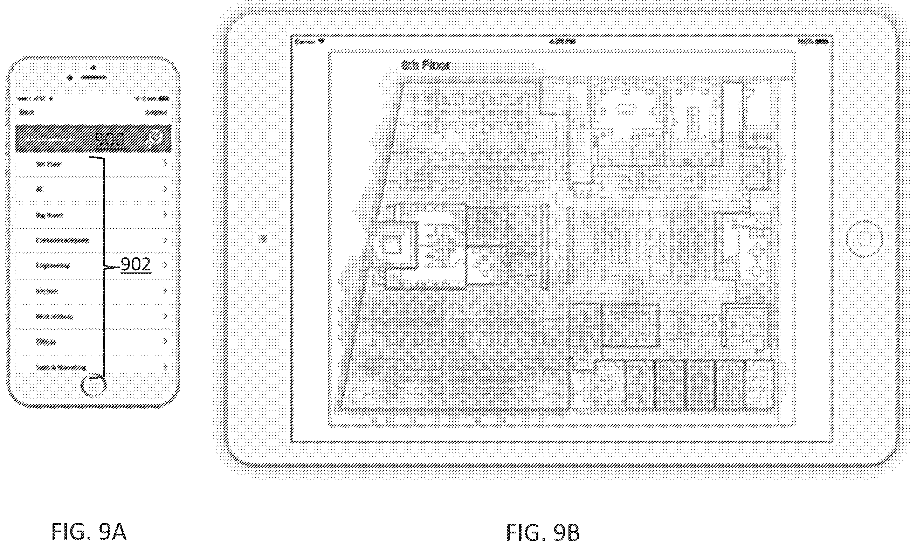

FIGS. 9A and 9B are screenshots from mobile computing devices illustrating applications to interface via one or more APIs with an intelligent lighting system-based platform in accordance with some embodiments. In FIG. 9A, a smart phone display shows an interface for controlling and managing systems in an office facility at address 900, with a menu of different options to view different spaces 902 within the facility. In some embodiments, an interface may include a higher menu of different facilities/addresses to be managed. In FIG. 9B, a tablet display provides a visualization of a selected space. The visualization may be a map of the selected space. The map may include a floor plan. The map may represent sensor data captured at an instant in time or collected over a period of time. The map may be a heat map generated from data collected by temperature sensors, a lighting map generated from data collected by ambient light sensors, or an occupancy map generated from data collected by occupancy sensors.

Intelligent lighting systems can consist of a range of different device types, each with its own capabilities. Some devices may be fully-integrated, with light source, networking, sensing, and control software combined in a single physical object, but it also may be useful to deploy devices containing only a subset of these four key features. In some embodiments, one or more devices may include, but are not limited to, an electromagnetic radiation sensor, a chemical sensor, a climate sensor, a sound sensor, etc. Sensors may include an analog and/or digital sensor.

Electromagnetic radiation sensors may include, but are not limited to, an active infrared sensor (e.g., a forward looking infrared-like imaging array), a passive infrared (PIR) sensor, a microwave sensor, a radar device, a lidar device, a photometer, a radiometer, an ambient light sensor, a digital camera, a thermographic camera, an electric beacon receiver, a charge-coupled device (CCD) image sensor, a complementary metal-oxide-semiconductor (CMOS) image sensor, a radio-frequency beacon sensor, and a radio-frequency identification (RFID) chip reader. Active infrared sensors may be used to detect and/or track people, vehicles, and/or other objects in, for example, low light or visually noisy environments (e.g., monitoring process equipment in refineries or manufacturing facilities). PIR sensors have relatively low resolution (e.g., a single bit indicating presence or absence) and typically require line of sight but are relatively inexpensive for deployment throughout an environment. Microwave sensors may be used to detect occupancy through barriers (e.g., walls, ceilings, and other obstacles). Ambient light sensors may be useful for daylight harvesting and, in some circumstances, motion detection. CCD or CMOS image sensors may be used for detection (e.g., facial recognition) and tracking (e.g., path reconstruction). An RF beacon sensor may be deployed in mobile devices carried by people, vehicles, and/or other objects (e.g., as an app including push notifications, mapping, and routing). An RFID reader may be used to detect and track people, vehicles, and/or other objects with RFID chips (e.g., identification cards, windshield stickers, etc.).

Chemical and/or biological sensors may include, but are not limited to, an oxygen sensor, a carbon dioxide sensor, a carbon monoxide sensor, an ammonia sensor, a radioactivity sensor, a DNA analysis device, a pathogen sensor, and a particulate matter sensor. For example, a carbon dioxide sensor may be used as a backup to an occupancy sensor. Some sensors may indicate hazardous or suspicious conditions in an environment, such as a fire (e.g., a smoke detector), an unexpected or undesirable presence of something (e.g., carbon monoxide sensor, radioactivity sensor, ammonia sensor to detect cooling system leakage, a pathogen sensor, etc.), an unexpected or undesirable absence of a substance (e.g., oxygen sensor), or explosive conditions (e.g., a particulate matter sensor in, for example, a grain processing plant).

Climate sensors may include, but are not limited to, a temperature sensor, a humidity sensor, a seismometer, and a pressure sensor also may indicate conditions in an environment (e.g., fire, flood, earthquake, and occupancy), data from which can be used to activate safety and security systems or optimize a HVAC system.

Sound sensors may include, but are not limited to, a microphone, a vibration sensor, a sonar device, and an ultrasound sensor. Such sensors may be used to measure ambient noise, detect occupancy (including intruders), and flag changes in sound signatures to indicate disruptions among people and maintenance needs among machines. Although relatively expensive, ultrasonic sensors may be used, particularly in high security risk environments, to convert ultrasonic waves to electrical circuits for impressive detection capabilities (e.g., being able to "see around corners").

### Automatic Profile Scheduling

According to some embodiments, an intelligent lighting system platform supports a very robust profile scheduling feature - specific parts of a facility can be configured to behave in specific ways at specific times of day. Facilities do not always operate on a rigid, fixed schedule, so manual configuration of when each profile should run is challenging. In some embodiments, information captured about an entire facility is used to learn the facility's operating rhythms (e.g., when the site is empty, sparsely occupied, or busy) and automatically apply an appropriate profile.

In one embodiment, a the week is divided into 672 fifteen-minute segments (7 x 24 x 4). For each segment, historical data is used to calculate average occupancy. The observed occupancy range is divided into *n* classes, where *n* is specified by the facility manager (typically 2 ≤ *n* ≤ 4). Classification thresholds are calculated based on segment boundaries, and a profile is assigned to each fifteen-minute segment based on the appropriate classification.

### Automatic Profile Adjustments

According to some embodiments, instead of manual configurations, the parameters of individual profiles (e.g., active and inactive levels, sensor delays, progressive dimming ramp times, and district heating (DH) targets) are automatically adjusted in order to optimize energy savings while maintaining employee safety and productivity.

In one embodiment, a gradient descent/simulated annealing technique is used to optimize profile parameters, with a fitness function that combines energy usage and information about frequency of manual overrides. This technique may be more useful as an offline process (e.g., updating parameters once each day) rather than in real time.

### Automatic Rejection of Spurious Sensor Events

In some embodiments, techniques are applied to avoid wasted energy and reduce the number of false positives generated, for example, by security applications running on top of a sensor network. For example, PIR occupancy sensors may be used to detect motion of people and/or vehicles. PIR sensor rely on changes in temperature and may be falsely triggered by, for example, warm airflow in a cool environment.

In one embodiment, a conditional probability function is generated for each sensor. Similar to the technique used in automatic profile scheduling described above, the function outputs the likelihood that a sensor event is spurious based on the fifteen-minute time segment in which the event occurs and the real-time state of neighboring sensors. These probability functions may be updated in a batch/offline manner to incorporate new data and capture potential facility changes.

### Automatic Sensor Tuning

In some embodiments, techniques are applied to tune the sensitivity of a sensor network. For example, PIR sensors are inherently analog but output a digital signal. Sensors that require analog-to-digital conversion have a sensitivity parameter. If the sensitivity is set too high, a sensor will produce false positives (e.g., implying motion when none is present). If the sensitivity is set too low, a sensor will produce false negatives (e.g., failing to sense motion that is occurring).

In one embodiment, data from an intelligent lighting system platform is fed back into each individual sensor to automatically adjust sensitivity. For example, when one sensor is not being triggered even though all of the neighboring sensors indicate activity, the sensitivity of that particular sensor is increased. Conversely, when one sensor is being triggered even though all of the neighboring sensors are not indicating activity, the sensitivity of that particular sensor is decreased. These adjustments may be carried out either in real-time (as each new sensor event arrives) or as a batch/offline process (once per day, for example).

### Movement Tracking Systems

In some embodiments, an intelligent lighting system platform may be used as a system for tracking people, vehicles, and/or other moving objects along a spectrum of granularity depending on the requirements of specific applications, ranging from aggregate numbers and anonymized patterns to real-time facial recognition and path reconstruction. In some embodiments, a sensor network may be visible in order to, for example, deter undesirable behaviors or activities (e.g., theft). In other embodiments, sensors are disguised via integration into a lighting infrastructure for surveillance purposes or for user comfort in the environment. For example, beacons or other sensors embedded in overhead lights may allow transportation service providers to track traffic and parking patterns (e.g., intersections, parking lots, etc.), employers to track employee productivity (e.g., on factory lines, in break rooms, etc.), service providers to track physical queues and adjust coverage (e.g., in banks, checkout lines, etc.), retailers to track physical shoppers (e.g., to design store layouts, prevent shoplifting, etc.), security and law enforcement providers to identify and track suspects or suspicious activities (e.g., in high risk locations such as transportation hubs, lockdown situations, etc.), and rescue providers to locate and track individuals (e.g., in fires, missing person cases, etc.).

### Security Systems

Monitoring and securing physical space is an important goal for many users of intelligent lighting. Because these lighting systems often provide very high sensor resolution (in terms of sensors per square foot), real-time monitoring, and a network connection to the outside world, they can be repurposed to augment or replace traditional security systems.

In some embodiments, a physical security system processes occupancy information (either anonymized "activity" data or tracking information about specific people) in real time and generates "alerts" according to rules programmed into the system. For instance, one rule may require sending an alert to a facility manager if any occupancy sensor indicates activity after 5:00 P.M. Another rule may require sending an executive an alert if the occupancy sensor in her office indicates activity while she is on vacation. In some embodiments, a system may be configured to detect not just the presence of person, vehicle, or object in an environment, but also whether that person, vehicle, or object is or is not authorized to be in that environment. In some embodiments, a knowledgeable user defines these rules (e.g., typical operating hours of the facility, who is allowed to access each part of a facility, etc.).

In some embodiments, techniques derived from the field of machine learning can reduce the need to update rules (as, e.g., usage of space shifts over time) or "false positives" (e.g., occupancy events caused by environmental factors such as airflow or temperature changes). Parameters for the rules discussed above may be learned through analysis of historical sensor data for the particular environment and/or other similar environments. Learning algorithms may be run at any or all geographic scales - from a full facility down to individual rooms.

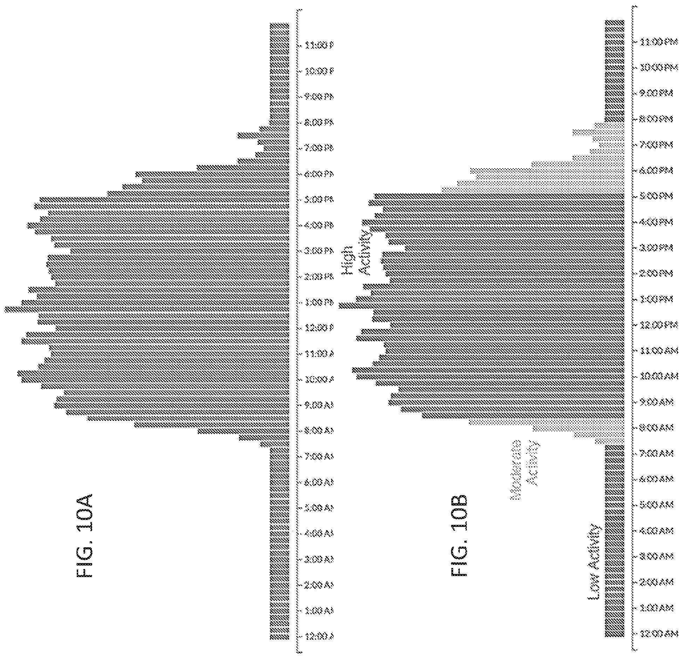

FIGS. 10A and 10B are graphs of occupancy data measured over a twenty-four hour period as enabled by an intelligent lighting system-based platform in accordance with some embodiments. In FIG. 10A, occupancy levels begin to increase starting between 7:00 A.M. and 8:00 A.M., rise sharply around 9:00 A.M., fluctuate around a high average until 5:00 P.M., and then begin falling to original levels by 8:00 P.M. In FIG. 10B, the occupancy graph from FIG. 10A is coded with activity classifications derived from historical data using machine learning techniques. The activity classifications correspond to the readings in the twenty-four hour period, including a first period of low activity followed by a first period of moderate activity, then a period of high activity, a second period of moderate activity, and finally a second period of low activity.

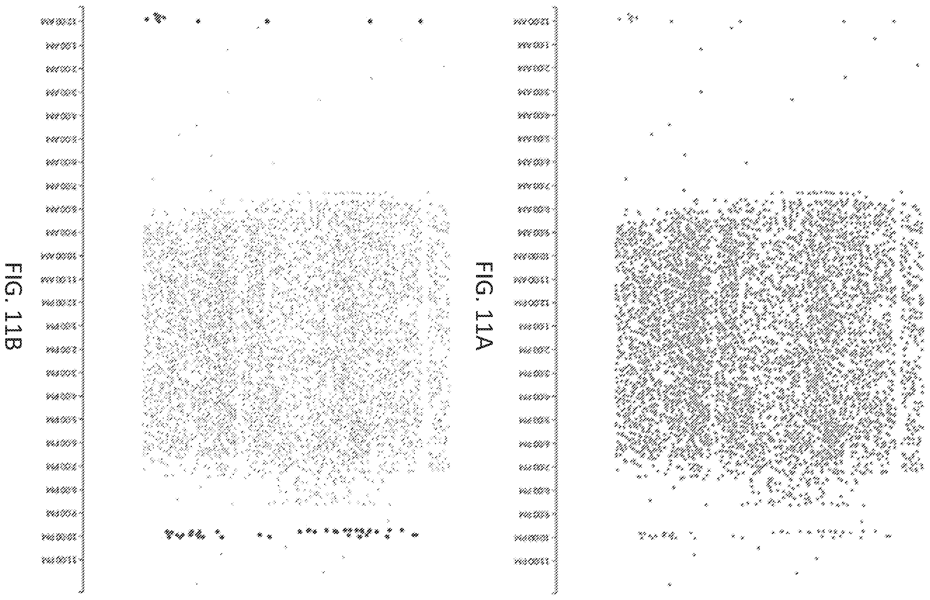

In some embodiments, each occupancy event is assigned a coefficient (a "probability of suspicion") based on these learned parameters, the current state of other nearby sensors, and/or the overall activity level in the environment to reduce the number of false positive alerts. FIG. 11A is a plot of the raw occupancy visualization for the twenty-four hour period, and FIG. 11B is a plot of the same occupancy data, post-processing, indicating suspicious activity.

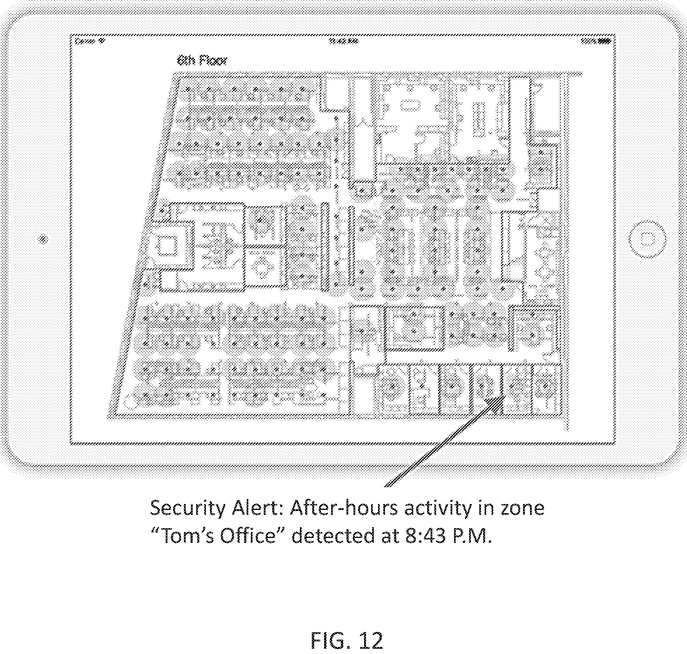

The real-time data from this lighting-based security system may be processed and presented to a user via an application similar to FIG. 12, which shows a screenshot from a mobile computing device illustrating suspicious activity in accordance with some embodiments. Sensor data is processed and analyzed using machine learning techniques to provide security alerts if suspicious activity is detected. In FIG. 12, a visualization of a facility includes a lighting map with a floor plan of the facility and an indication of activity in a suspicious zone of the facility (e.g., "Tom's Office") and/or at a suspicious time (e.g., after hours, detected at 8:43 P.M.). A security alert may be visual (graphics or text), audio, and/or tactile.

### Scheduled Space Optimization Systems

The data generated by an intelligent lighting system may provide insight into how spaces are actually used. For example, the data may be used to more intelligently schedule meeting rooms in commercial office settings or to allocate space in a facility that follows "hoteling" practices.

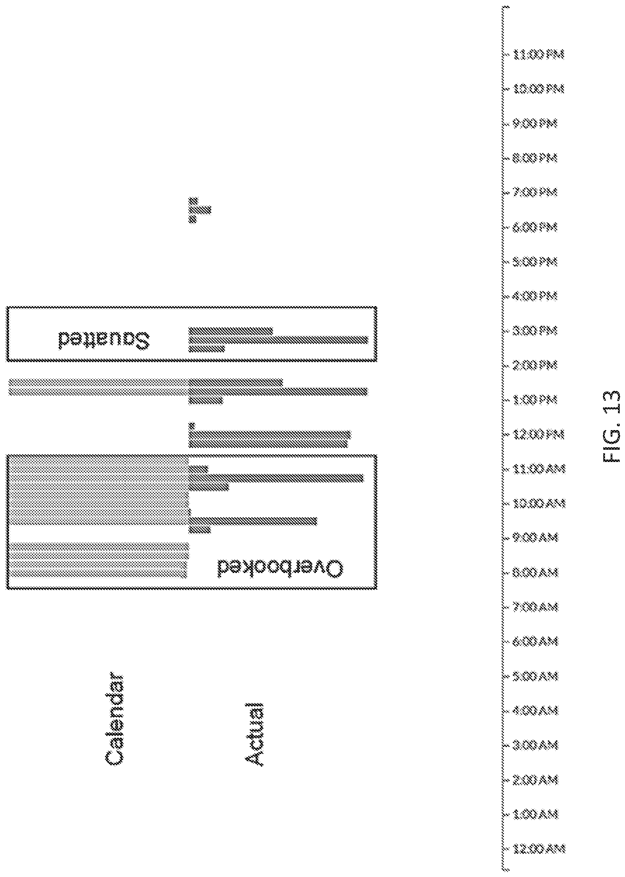

In some embodiments, occupancy data generated by intelligent lighting systems may be used to optimize space utilization. For example, even with shared calendars and scheduling software, shared spaces (e.g., conference rooms) often end up "overbooked" (the scheduled time exceeds the time for which it is actually needed), "underbooked" (the scheduled time is less than the time for which it is actually needed), or "squatted" (used without scheduling in the shared calendar). FIG. 13 is a diagram illustrating calendared room utilization versus actual room utilization.

In some embodiments, real-time occupancy data is automatically fed back into a calendar system to give a more accurate representation of space utilization. For example, when occupancy sensing detects that a meeting has ended earlier than scheduled, the end time of its entry in the calendar system automatically may be shortened. When occupancy sensing detects that a meeting is running longer than scheduled, the end time of its entry in the calendar system automatically may be lengthened. When occupancy sensing detects a group "squatting" in an unscheduled conference room, an "ad-hoc" entry in the calendar system automatically may be created.

### Climate Control Systems

In addition to occupancy data, an intelligent lighting system platform may generate large amounts of other high-resolution data, including temperature and/or humidity data. By providing significantly more sampling points (e.g., one per light fixture versus one per thermostat), this data feed may allow HVAC systems to better understand the range of temperature and humidity in a facility, as well as pointing out any particular hot or cold spots. In some embodiments, this data may be combined with software to allow users to specify a desired temperature in their "personal space" (be it, e.g., an office, a cubicle, or any other region of the facility). Real-time high-resolution data may enable a level of personalized climate control that is not possible with traditional HVAC systems.

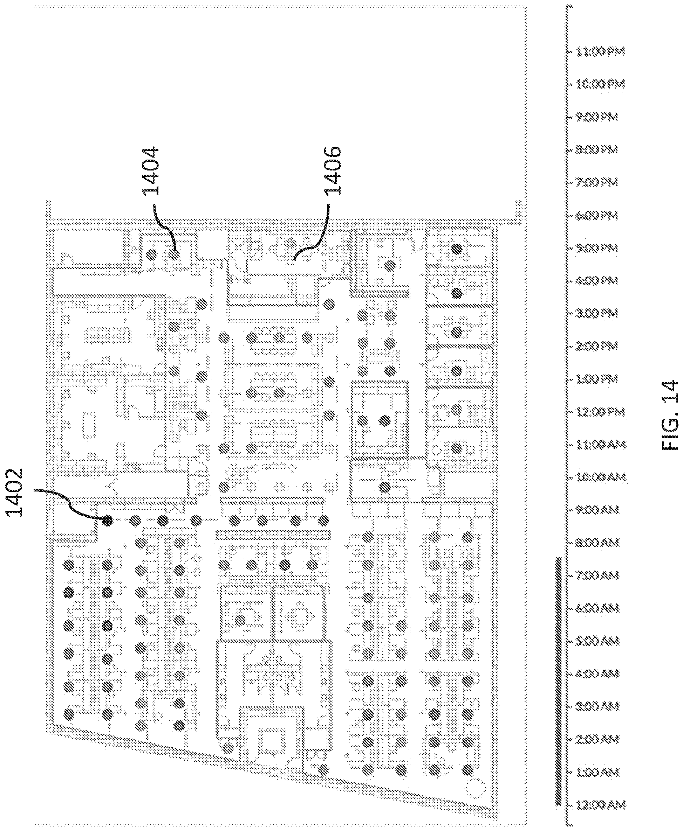

FIG. 14 is a diagram of an ambient temperature "heatmap" illustrating personalized environmental control using an intelligent lighting system-based platform in accordance with some embodiments. In FIG. 14, a visualization of a facility includes a lighting map with a floor plan of the facility and an indication of ambient and/or user-defined temperature for each space. For example, the visualization includes indications of higher ambient temperature 1402, indications of median ambient temperatures 1404, and indications of lower ambient temperature 1406. The temperature indications may represent real-time temperature readings or average temperature readings for a selected period of time. In FIG. 14, the map represents temperature readings averaged over a period of time from midnight to 7:30 A.M. These average temperature readings may be for this time period on one day or over a plurality of days.

### Energy and Equipment Optimization Systems

In some embodiments, an intelligent lighting system-based platform supports an energy management and/or equipment optimization system. Real-time monitoring and management may support energy and/or resource optimization as well as identification of problems or hazards. For example, data gathered from the sensors included in the intelligent lighting system may be processed to monitor and manage the energy usage for an area. In some embodiments, an energy management system provides measurement of lighting energy usage with integrated power metering and other electrical loads, validation of energy savings and projections for utility rebates, and/or monitoring trends and progress toward returns on investments.

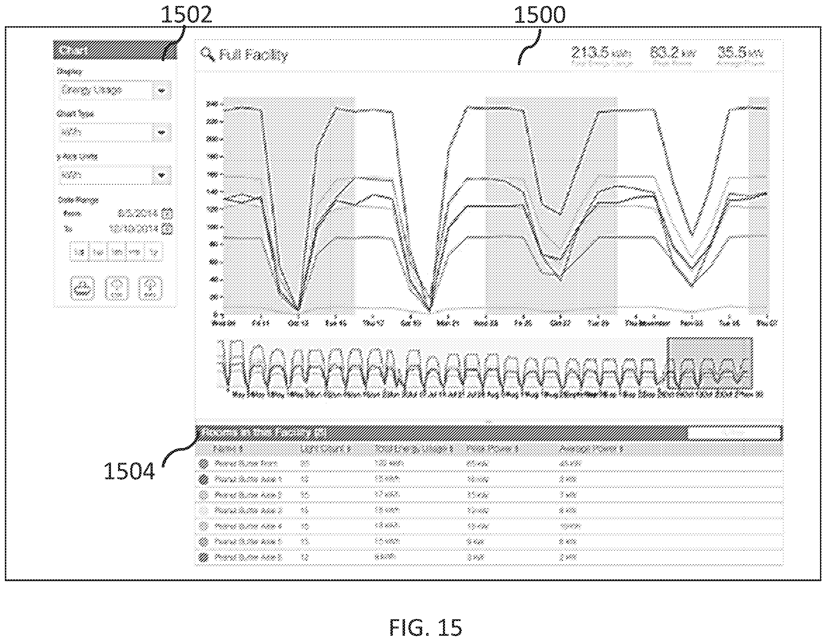

FIG. 15 is a display screenshot illustrating a report generated by an energy management system built on an intelligent lighting system-based platform in accordance with some embodiments.

FIG. 15 is a display screenshot illustrating a report generated by an energy management system built on an intelligent lighting system-based platform in accordance with some embodiments. In FIG. 15, the display depicts a graphical report 1500 for a full facility. Toolbar 1502 may be used to generate the report according to user preferences, including type of display, type of chart, type of energy unit, and date range. In FIG. 15, aggregated energy usage (kWh) from August 5, 2014, to December 10, 2014, has been selected for display. The graphical report 2000 includes a chart plotting full facility energy usage over time, a full facility total energy usage (213.5 kWh), full facility peak power (83.2 kW), and a full facility average power (35.5 kW) during the selected time period. Chart 1504 includes a breakdown of light count, total energy usage, peak power, and average power in each room of the full facility.

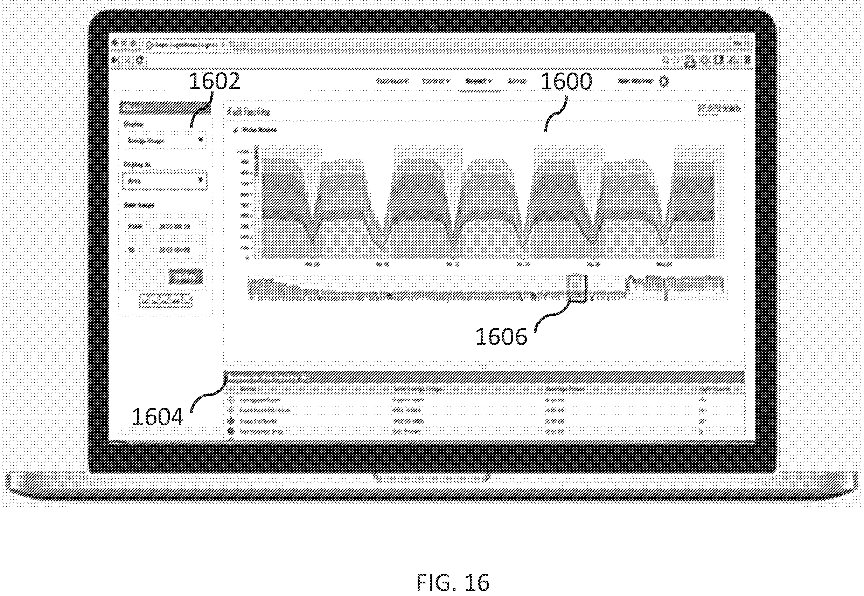

FIG. 16 is another display screenshot illustrating a report generated by an energy management system built on an intelligent lighting system-based platform in accordance with some embodiments. In FIG. 16, the display depicts a graphical report 1600 for a full facility. Toolbar 1602 may be used to generate the report according to user preferences, including type of display, type of chart, and date range (including, e.g., which days of the week during the selected date range). In FIG. 16, energy usage per area of the facility has been selected for display. The graphical report 1600 includes a chart plotting full facility energy usage per area over time. Chart 1604 includes a breakdown of total energy usage, average power, and light count in each room of the full facility. According to some embodiments, a smaller period 1606 on the graph may be selected by the user to further analyze and monitor the energy consumption in more detail. For example, if the user initially selected a date range from March 24, 2015, until May 5, 2015, the user could choose a snapshot 1606, for example, from April 26, 2015, until May 1, 2015, on the graph. The enlarged and complete graphical report of energy consumption for the snapshot 1606 is enlarged and depicted above.

In some embodiments, the intelligent lighting systems could be used as an equipment optimization system. The data gathered from the sensors included in the intelligent lighting system could be processed to monitor and manage the power usage for at least one piece of equipment over a period of time, thereby tracking when machinery is being used and how much energy it is consuming. Real-time monitoring and managing power usage for at least one piece of equipment may be used to optimize performance and effectiveness by the at least one piece of equipment. Power metering data also may be used to identify when machinery needs maintenance attention.

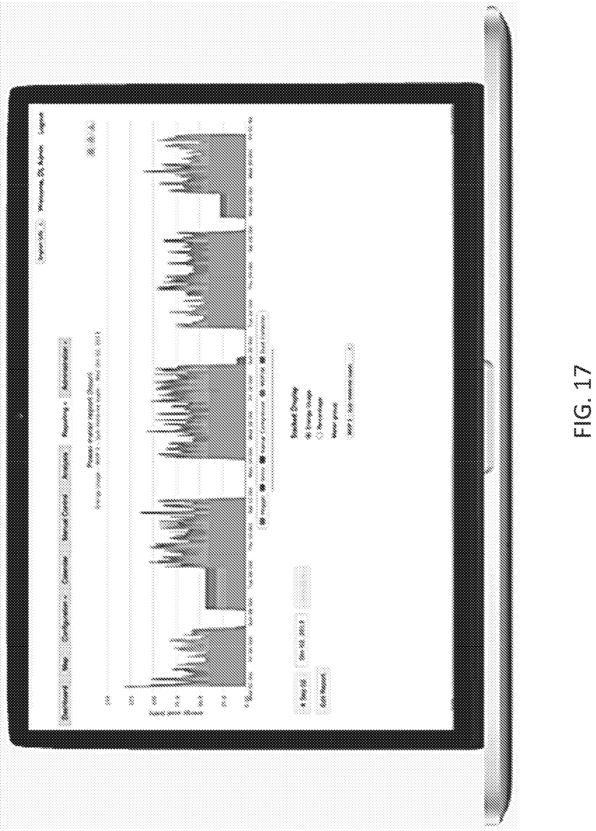

FIG. 17 is a display screenshot illustrating a report generated by an equipment optimization system built on an intelligent lighting system-based platform in accordance with some embodiments. In FIG. 17, the display shows energy usage and/or energy consumption by at least one piece of equipment over a period of time. In some embodiments, the report could be displayed as a percentage of energy utilized by at least one piece of equipment.

### Space Optimization Systems

In some embodiments, an intelligent lighting system platform may be used as a space optimization system. Data gathered from the sensors included in an intelligent lighting system may be processed to monitor and manage how spaces are actually used. Real-time monitoring and managing spaces could have a plurality of applications (in addition to scheduling meeting rooms, allocating desk space in a facility, or allocating rooms in a hotel), including gathering data about how a space is being used, how people travel through a space, and how to maximize limited space and productivity. A space optimization system may be used to optimize a layout of a store, warehouse, or factory floor, for example, where to position a new display, item, or piece of equipment.

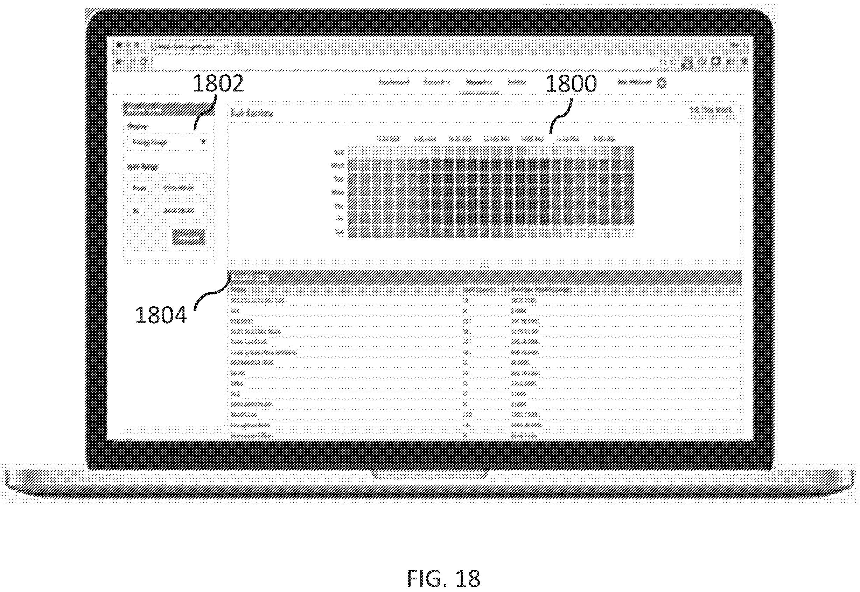

FIG. 18 is a display screenshot illustrating a report generated by an energy management system built on an intelligent lighting system-based platform in accordance with some embodiments. In FIG. 18, the display depicts a graphical report 1800 for a full facility. Toolbar 1802 may be used to generate the report according to user preferences. In FIG. 18, energy usage has been selected for display. The cumulative energy usage over the a defined time period is graphically represented as a grid. The date range may be adjusted to generate the report for a user-specified time period. Chart 1804 includes a breakdown of light count and weekly energy use in each room of the full facility. In some embodiments, the occupancy may indicate all or a portion of an inventory. A user may use this information to detect the presence of a type of item, consolidate items of a similar type, and/or disperse items of a similar type.

### Emergency Management Systems

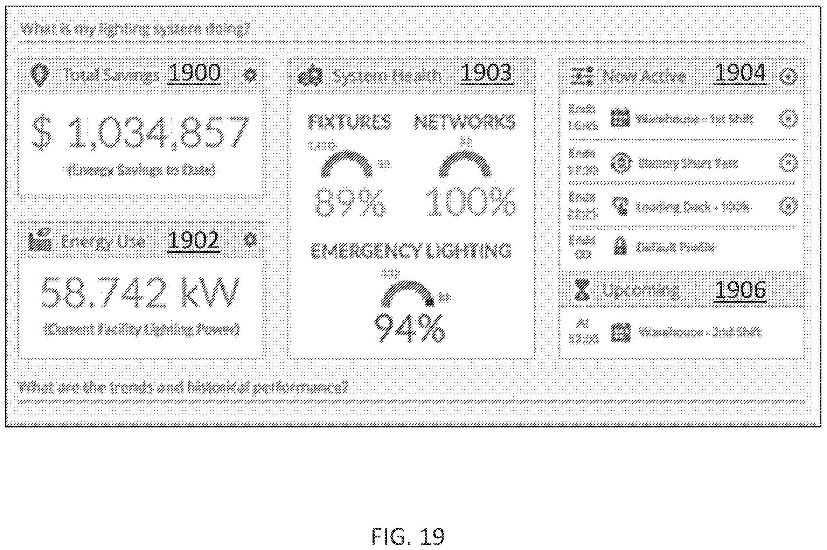

In some embodiments, data gathered from the sensors included in the intelligent lighting system may be processed to monitor and manage the system health of some embodiments of the intelligent lighting system. FIG. 19 is a display screenshot illustrating a report generated by an emergency management system built on an intelligent lighting system-based platform in accordance with some embodiments. In FIG. 19, the display includes indications of total energy savings to date 1900, current energy usage 1902, system health 1904, current activities 1906, and upcoming activities 1908. The system health includes measures of health in fixtures, networks, and emergency lighting.

### Inventory Management Systems

In some embodiments, an intelligent lighting system platform is used as an inventory management system. Manufacturers, distributors, retailers, and many other entities share a need to track specific objects (and their conditions), whether parts moving along an assembly line, pallets on a truck, consumer goods at a drug store, or medications in a hospital, etc. Intelligent lighting systems with built-in object tracking capabilities (e.g., RFID, visual object recognition, or some other technology) may provide this functionality to augment or replace traditional inventory management systems.

Object tracking capabilities may augment the functionality of some embodiments of an intelligent lighting system as an inventory management system. In some embodiments, an intelligent lighting systems has built-in object tracking capabilities. In other embodiments, an intelligent lighting system has devices with object tracking capabilities mounted thereon or otherwise connected to the lighting system platform. The sensors may be RFID chip readers to recognize chips attached to the objects. Alternatively or in addition, sensors with visual object recognition capabilities may be used to detect and track objects. In some embodiments, a heat map may be used to visualize inventory or objects within a facility.

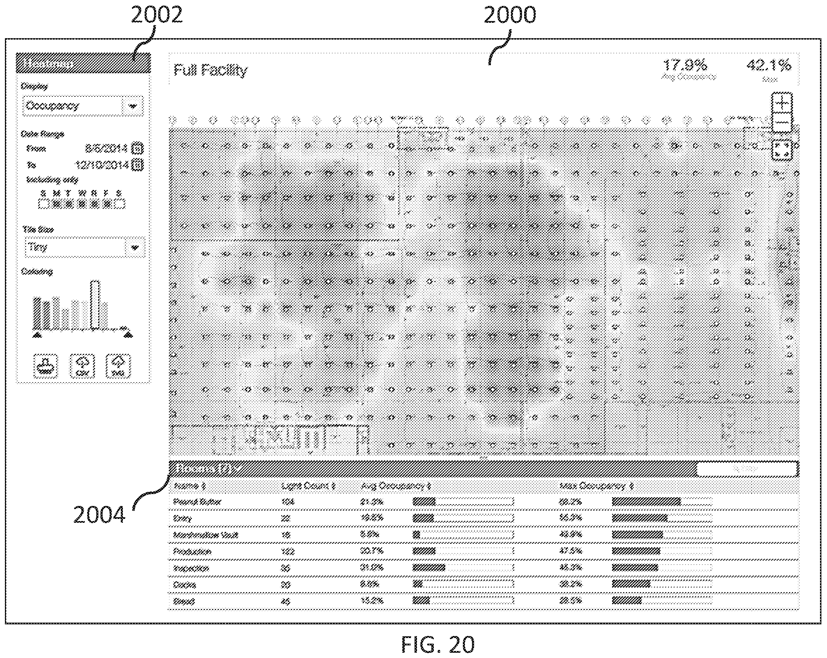

FIG. 20 is a display screenshot illustrating a report generated by an inventory management system built on an intelligent lighting system-based platform in accordance with some embodiments. In FIG. 20, the display depicts a graphical report 2000 for a full facility. Toolbar 2002 may be used to generate the report according to user preferences. In FIG. 20, occupancy has been selected for display. The date range of August 5, 2014, to December 10, 2014, may be adjusted to generate the report for a user-specified time period. Specific days of the week, for example weekdays only, may be selected within the date range. The tile size and coloring of the display may be adjusted according to user preferences. The graphical report 2000 includes a heat map representing occupancy, a full facility average occupancy (17.9%), and a full facility maximum occupancy (42.1%) during the selected time period. Chart 2004 includes a breakdown of light count, average occupancy, and maximum occupancy in each room of the full facility. In some embodiments, the occupancy may indicate all or a portion of an inventory. A user may use this information to detect the presence of a type of item, consolidate items of a similar type, and/or disperse items of a similar type.

### Conclusion

While various inventive embodiments have been described and illustrated herein, those of ordinary skill in the art will readily envision a variety of other means and/or structures for performing the function and/or obtaining the results and/or one or more of the advantages described herein, and each of such variations and/or modifications is deemed to be within the scope of the inventive embodiments described herein. More generally, those skilled in the art will readily appreciate that all parameters, dimensions, materials, and configurations described herein are meant to be exemplary and that the actual parameters, dimensions, materials, and/or configurations will depend upon the specific application or applications for which the inventive teachings is/are used. Those skilled in the art will recognize, or be able to ascertain using no more than routine experimentation, many equivalents to the specific inventive embodiments described herein. It is, therefore, to be understood that the foregoing embodiments are presented by way of example only and that, within the scope of the appended claims and equivalents thereto, inventive embodiments may be practiced otherwise than as specifically described and claimed. Inventive embodiments of the present disclosure are directed to each individual feature, system, article, material, kit, and/or method described herein. In addition, any combination of two or more such features, systems, articles, materials, kits, and/or methods, if such features, systems, articles, materials, kits, and/or methods are not mutually inconsistent, is included within the inventive scope of the present disclosure.

The above-described embodiments can be implemented in any of numerous ways. For example, embodiments may be implemented using hardware, software or a combination thereof. When implemented in software, the software code can be executed on any suitable processor or collection of processors, whether provided in a single computer or distributed among multiple computers.

Further, it should be appreciated that a computer may be embodied in any of a number of forms, such as a rack-mounted computer, a desktop computer, a laptop computer, or a tablet computer. Additionally, a computer may be embedded in a device not generally regarded as a computer but with suitable processing capabilities, including a Personal Digital Assistant (PDA), a smart phone or any other suitable portable or fixed electronic device.

Also, a computer may have one or more input and output devices. These devices can be used, among other things, to present a user interface. Examples of output devices that can be used to provide a user interface include printers or display screens for visual presentation of output and speakers or other sound generating devices for audible presentation of output. Examples of input devices that can be used for a user interface include keyboards, and pointing devices, such as mice, touch pads, and digitizing tablets. As another example, a computer may receive input information through speech recognition or in other audible format.

Such computers may be interconnected by one or more networks in any suitable form, including a local area network or a wide area network, such as an enterprise network, and intelligent network (IN) or the Internet. Such networks may be based on any suitable technology and may operate according to any suitable protocol and may include wireless networks, wired networks or fiber optic networks.

The various methods or processes outlined herein may be coded as software that is executable on one or more processors that employ any one of a variety of operating systems or platforms. Additionally, such software may be written using any of a number of suitable programming languages and/or programming or scripting tools, and also may be compiled as executable machine language code or intermediate code that is executed on a framework or virtual machine.

Also, various inventive concepts may be embodied as one or more methods, of which an example has been provided. The acts performed as part of the method may be ordered in any suitable way. Accordingly, embodiments may be constructed in which acts are performed in an order different than illustrated, which may include performing some acts simultaneously, even though shown as sequential acts in illustrative embodiments.

All definitions, as defined and used herein, should be understood to control over dictionary definitions, definitions in documents, and/or ordinary meanings of the defined terms.

The indefinite articles "a" and "an," as used herein in the specification and in the claims, unless clearly indicated to the contrary, should be understood to mean "at least one."

The phrase "and/or," as used herein in the specification and in the claims, should be understood to mean "either or both" of the elements so conjoined, *i.e*., elements that are conjunctively present in some cases and disjunctively present in other cases. Multiple elements listed with "and/or" should be construed in the same fashion, *i.e.,* "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, *i.e.,* the inclusion of at least one, but also including more than one, of a number or list of elements, and, optionally, additional unlisted items. Only terms clearly indicated to the contrary, such as "only one of' or "exactly one of," or, when used in the claims, "consisting of," will refer to the inclusion of exactly one element of a number or list of elements. In general, the term "or" as used herein shall only be interpreted as indicating exclusive alternatives (i.e. "one or the other but not both") when preceded by terms of exclusivity, such as "either," "one of," "only one of," or "exactly one of." "Consisting essentially of," when used in the claims, shall have its ordinary meaning as used in the field of patent law.

As used herein in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified. Thus, as a non-limiting example, "at least one of A and B" (or, equivalently, "at least one of A or B," or, equivalently "at least one of A and/or B") can refer, in one embodiment, to at least one, optionally including more than one, A, with no B present (and optionally including elements other than B); in another embodiment, to at least one, optionally including more than one, B, with no A present (and optionally including elements other than A); in yet another embodiment, to at least one, optionally including more than one, A, and at least one, optionally including more than one, B (and optionally including other elements); etc.

In the claims, as well as in the specification above, all transitional phrases such as "comprising," "including," "carrying," "having," "containing," "involving," "holding," "composed of," and the like are to be understood to be open-ended, *i.e.,* to mean including but not limited to. Only the transitional phrases "consisting of' and "consisting essentially of' shall be closed or semi-closed transitional phrases, respectively, as set forth in the United States Patent Office Manual of Patent Examining Procedures, Section 2111.03.

## Claims

1. A system (112, 114, 300, 606) to monitor an environment, the system comprising:
a plurality of lighting fixtures (600) in the environment;
an existing infrastructure including at least one of:
a plurality of physical locations provided in the environment for the plurality of lighting fixtures (600);
an electric power supply including a plurality of electrical connections for powering the plurality of lighting fixtures (600); and
a first network including a plurality of network connections for exchanging data with the plurality of lighting fixtures (600),
a plurality of sensors (302, 602, 702, 704),
wherein each sensor (302, 602, 702, 704) of the plurality of sensors (302, 602, 702, 704) is operable to detect at least one change in at least one portion of the environment; and
wherein the plurality of sensors (302, 602, 702, 704) includes at least one sensor
mechanically connected with at least one lighting fixture of the plurality of lighting fixtures (600) such that the at least one sensor and the at least one lighting fixture share the same physical location of the plurality of physical locations provided in the environment for the plurality of lighting fixtures (600); and/or
electrically connected with at least one lighting fixture of the plurality of lighting fixtures (600) such that the at least one sensor and the at least one lighting fixture share the same electrical connection of the plurality of electrical connections for powering the plurality of lighting fixtures (600); and/or
communicatively connected with at least one lighting fixture of the plurality of lighting fixtures (600) such that the at least one sensor and the at least one lighting fixture share the same network connection of the plurality of network connections to exchange data over the first network;
at least one memory (312) configured to store
at least one record of each change in the at least one portion of the environment detected by each sensor (302, 602, 702, 704) of the plurality of sensors (302, 602, 702, 704), the at least one record including a time stamp indicating a time measure associated with the change in the at least one portion of the environment and a location stamp indicating a physical location of the corresponding sensor (302, 602, 702, 704); and
at least one rule predefined by a user, the at least one rule governing at least one response by the system to at least one change in at least one portion of the environment based on historical information and machine learning;
at least one processor (304) communicatively connected to the plurality of sensors (302, 602, 702, 704) and the at least one memory (312), the at least one processor configured to:
monitor the plurality of sensors (302, 602, 702, 704) for at least one change in the at least one portion of the environment;
generate at least one response by the system (112, 114, 300, 606) to the at least one change in the at least one portion of the environment
**characterized in that** said response is based on the at least one record of the at least one change and the at least one rule, the at least one response including at least one of:
a report of the historical data associated with the at least one record;
an alert associated with the at least one record;
a digital control signal to control at least one lighting fixture (600) of the plurality of lighting fixtures (600); and
a modification of the at least one rule.

2. The system (112, 114, 300, 606) of claim 1, wherein the digital control signal controls the at least one lighting fixture (600) of the plurality of lighting fixtures (600) to at least one of:
activate the at least one lighting fixture (600);
deactivate the at least one lighting fixture (600);
flash the at least one lighting fixture (600);
select a light level of visible light delivered by the at least one lighting fixture (600);
select a color temperature of visible light delivered by the at least one lighting fixture (600);
deliver nonvisible light with the at least one lighting fixture (600); and
provide directional cues using the at least one lighting fixture (600).

3. The system (112, 114, 300, 606) of claim 2, wherein the selected color temperature of the visible light is red.

4. The system (112, 114, 300, 606) of claim 2, wherein the nonvisible light includes infrared light.

5. The system (112, 114, 300, 606) of claim 1, wherein the plurality of sensors (302, 602, 702, 704) includes
- at least one of an active infrared sensor, a passive infrared sensor, a microwave sensor, a radar device, a lidar device, a photometer, a radiometer, ambient light sensor (702), a digital camera, a thermographic camera, an electric beacon receiver, and a radio-frequency identification, RFID, chip reader, or
- at least one of a microphone, a sonar device, a seismograph, an ultrasound sensor, a temperature sensor (704), a humidity sensor, a chemical sensor, a smoke sensor, and a particulate matter sensor.

6. The system (112, 114, 300, 606) of claim 1, wherein at least one of the report of the historical data associated with the at least one record and the alert associated with the at least one record includes a graphical representation, the graphical representation including at least one of an occupancy map, a heat map, a temporal grid, a graph, and a scatter plot.

7. The system (112, 114, 300, 606) of claim 1, wherein the plurality of lighting fixtures (600) in the environment have a first spatial resolution of lighting fixtures (600) in terms of an amount of lighting fixtures per an area, and the plurality of sensors (302, 602, 702, 704) have a second spatial resolution of sensors (302, 602, 702, 704) in terms of an amount of sensors per the area, wherein the first spatial resolution and the second spatial resolution are the same.

8. The system (112, 114, 300, 606) of claim 1, wherein the plurality of physical locations include
- at least one overhead physical location, or
- at least one task height physical location.

9. The system (112, 114, 300, 606) of claim 1, wherein the plurality of electrical connections include at least one of a wire, a cable, a raceway, a bus bar, a bus duct, a junction box, and a power meter.

10. The system (112, 114, 300, 606) of claim 1, wherein the plurality of network connections includes at least one of a wired connection and a wireless connection.

11. The system (112, 114, 300, 606) of claim 1, wherein the first network is at least one of a point-to-point network, a bus network, a star network, a ring network, a mesh network, a tree network, a hybrid network, and a daisy chain network.

12. A method for monitoring an environment, the method comprising:
providing a plurality of sensors (302, 602, 702, 704),
wherein each sensor (302, 602, 702, 704) of the plurality of sensors (302, 602, 702, 704) is operable to detect at least one change in at least one portion of the environment;
wherein the plurality of sensors (302, 602, 702, 704) includes at least one sensor
mechanically connected with at least one lighting fixture of a plurality of lighting fixtures (600) such that the at least one sensor and the at least one lighting fixture share the same physical location of the plurality of physical locations provided in the environment for the plurality of lighting fixtures (600); and/or
electrically connected with at least one lighting fixture of the plurality of lighting fixtures (600) such that the at least one sensor and the at least one lighting fixture share the same electrical connection of the plurality of electrical connections for powering the plurality of lighting fixtures (600); and/or
communicatively connected with at least one lighting fixture of the plurality of lighting fixtures (600) such that the at least one sensor and the at least one lighting fixture share the same network connection of the plurality of network connections to exchange data over the first network;
using an existing infrastructure including at least one of:
a plurality of physical locations provided in the environment for the plurality of lighting fixtures (600);
an electric power supply including a plurality of electrical connections for powering the plurality of lighting fixtures (600); and
a first network including a plurality of network connections for exchanging data with the plurality of lighting fixtures (600),
monitoring the plurality of sensors (302, 602, 702, 704) for at least one change in the at least one portion of the environment;
storing at least one record of the at least one change in the at least one portion of the environment detected by at least one sensor (302, 602, 702, 704) of the plurality of sensors (302, 602, 702, 704), the at least one record including at least one time stamp indicating at least one time measure associated with the at least one change in the at least one portion of the environment and at least one location stamp indicating at least one physical location of the at least one sensor (302, 602, 702, 704); and
providing at least one rule predefined by a user, the at least one rule governing at least one response to the at least one change in the at least one portion of the environment based on historical information and machine learning;
generating at least one response to the at least one change in the at least one portion of the environment
**characterized in that** said response is based on the at least one record and the at least one rule, the at least one response including at least one of:
a graphical representation of the historical data associated with the at least one record;
an alert associated with the at least one record; and
a digital control signal to control at least one lighting fixture (600) of the plurality of lighting fixtures (600); and
a modification of the at least one rule.

13. The system (112, 114, 300, 606) of claim 1, configured for tracking at least one of objects and individuals in said environment,
wherein the at least one memory (312) is configured to store records of changes in the presence or the absence of the at least one of the object and the individual as detected by the plurality of sensors (302, 602, 702, 704), each of the records including a time stamp indicating a time measure associated with a change and a location stamp indicating a physical location of a sensor (302, 602, 702, 704) detecting the change; and
wherein the at least one processor is configured to generate a response by the system (112, 114, 300, 606) to the at least one change in the presence or the absence of at least one of the object and the individual in the at least one portion of the environment based on at least one record of at least one change.

14. The system (112, 114, 300, 606) of claim 13, wherein the system is configured for tracking at least one of an identification, a location, a movement, a density, a distribution, and a pattern of the at least one of the object and the individual in the environment.

15. The system (112, 114, 300, 606) of claim 14, wherein the system is further configured for at least one of security monitoring, search and rescue, inventory management, marketing research, and space utilization.

## Patentansprüche

1. System (112, 114, 300, 606) zur Überwachung einer Umgebung, das System umfassend:
eine Mehrzahl von Beleuchtungskörpern (600) in der Umgebung;
eine bestehende Infrastruktur, die mindestens eines von nachfolgenden aufweist:
eine Mehrzahl von physikalischen Orten, die in der Umgebung für die Mehrzahl von Beleuchtungskörpern (600) vorgesehen sind;
eine elektrische Stromversorgung, die eine Mehrzahl von elektrischen Verbindungen zum Speisen der Mehrzahl von Beleuchtungskörpern (600) aufweist; und
ein erstes Netzwerk, das eine Mehrzahl von Netzwerkverbindungen zum Datenaustausch mit der Mehrzahl von Beleuchtungskörpern (600) aufweist,
eine Mehrzahl von Sensoren (302, 602, 702, 704),
wobei jeder Sensor (302, 602, 702, 704) der Mehrzahl von Sensoren (302, 602, 702, 704) betreibbar ist, um mindestens eine Änderung in mindestens einem Teil der Umgebung zu erfassen; und
wobei die Mehrzahl von Sensoren (302, 602, 702, 704) mindestens einen Sensor aufweist, der
mechanisch mit mindestens einem Beleuchtungskörper der Mehrzahl von Beleuchtungskörpern (600) verbunden ist, so dass der mindestens eine Sensor und der mindestens eine Beleuchtungskörper denselben physikalischen Ort der Mehrzahl von physikalischen Orten teilen, die in der Umgebung für die Mehrzahl von Beleuchtungskörpern (600) vorgesehen sind; und/oder
elektrisch mit mindestens einem Beleuchtungskörper der Mehrzahl von Beleuchtungskörpern (600) verbunden ist, so dass der mindestens eine Sensor und der mindestens eine Beleuchtungskörper dieselbe elektrische Verbindung der Mehrzahl von elektrischen Verbindungen zur Stromversorgung der Mehrzahl von Beleuchtungskörpern (600) teilen; und/oder
kommunikativ mit mindestens einem Beleuchtungskörper der Mehrzahl von Beleuchtungskörpern (600) verbunden ist, so dass der mindestens eine Sensor und der mindestens eine Beleuchtungskörper dieselbe Netzwerkverbindung der Mehrzahl von Netzwerkverbindungen teilen, um Daten über das erste Netzwerk auszutauschen;
mindestens einen Speicher (312) zum Speichern von
mindestens einer Aufzeichnung einer jeden Änderung in dem mindestens einen Teil der Umgebung, die von jedem Sensor (302, 602, 702, 704) der Mehrzahl von Sensoren (302, 602, 702, 704) erfasst wird, wobei die mindestens eine Aufzeichnung einen Zeitstempel enthält, der eine Zeitmessung angibt, die zu der Änderung in dem mindestens einen Teil der Umgebung gehört, und einen Ortsstempel enthält, der einen physikalischen Ort des entsprechenden Sensors (302, 602, 702, 704) angibt,; und
mindestens einer von einem Benutzer vordefinierten Regel, wobei die mindestens eine Regel mindestens eine Reaktion des Systems auf mindestens eine Änderung in mindestens einem Teil der Umgebung auf der Grundlage historischer Informationen und maschinellen Lernens regelt;
mindestens einen Prozessor (304), der kommunikativ mit der Mehrzahl von Sensoren (302, 602, 702, 704) und dem mindestens einen Speicher (312) verbunden ist, wobei der mindestens eine Prozessor konfiguriert ist um:
die Mehrzahl von Sensoren (302, 602, 702, 704) auf mindestens eine Änderung in dem mindestens einen Teil der Umgebung zu überwachen;
mindestens eine Antwort durch das System (112, 114, 300, 606) auf die mindestens eine Änderung in dem mindestens einen Teil der Umgebung zu erzeugen
**dadurch gekennzeichnet, dass** die Antwort auf der mindestens einen Aufzeichnung der mindestens einen Änderung und der mindestens einen Regel basiert, wobei die mindestens eine Antwort mindestens eines der folgenden umfasst:
einen Bericht über die historischen Daten, die zu der mindestens einen Aufzeichnung gehören;
eine Warnung, die zu der mindestens einen Aufzeichnung gehört;
ein digitales Steuersignal zum Steuern mindestens eines Beleuchtungskörpers (600) aus der Mehrzahl von Beleuchtungskörpern (600); und
eine Änderung der mindestens einen Regel.

2. System (112, 114, 300, 606) nach Anspruch 1, bei dem das digitale Steuersignal den mindestens einen Beleuchtungskörper (600) aus der Mehrzahl von Beleuchtungskörpern (600) zu mindestens einem von folgenden steuert:
Aktivieren des mindestens einen Beleuchtungskörpers (600);
Deaktivieren des mindestens einen Beleuchtungskörpers (600);
Aufblinken des mindestens einen Beleuchtungskörper (600);
Auswählen eines Lichtpegels sichtbaren Lichts, das von dem mindestens einen Beleuchtungskörper (600) geliefert wird;
Auswählen einer Farbtemperatur sichtbaren Lichts, das von dem mindestens einen Beleuchtungskörper (600) geliefert wird;
Liefern von nicht-sichtbarem Licht durch den mindestens einen Beleuchtungskörper (600); und
Abgeben von Richtungshinweisen unter Benutzung des mindestens einen Beleuchtungskörpers (600).

3. System (112, 114, 300, 606) nach Anspruch 2, wobei die gewählte Farbtemperatur des sichtbaren Lichts rot ist.

4. System (112, 114, 300, 606) nach Anspruch 2, wobei das nicht-sichtbare Licht Infrarotlicht einschließt.

5. System (112, 114, 300, 606) nach Anspruch 1, wobei die Mehrzahl von Sensoren (302, 602, 702, 704) Folgendes umfasst
- einen aktiven Infrarotsensor und/oder einen passiven Infrarotsensor und/oder einen Mikrowellensensor und/oder eine Radareinrichtung und/oder eine Lidar-Einrichtung und/oder ein Photometer und/oder ein Radiometer und/oder einen Umgebungslichtsensor (702) und/oder eine Digitalkamera und/oder eine Thermografie-Kamera und/oder einem elektrischen Baken-Empfänger und/oder ein Radiofrequenz-Identifikations-, RFID-, Chip-Lesegerät, oder
- ein Mikrofon und/oder ein Sonargerät und/oder einen Seismographen und/oder einen Ultraschallsensor und/oder einen Temperatursensor (704) und/oder einen Feuchtigkeitssensor und/oder einem chemischen Sensor und/oder einen Rauchsensor und/oder einen Feinstaubsensor.

6. System (112, 114, 300, 606) nach Anspruch 1, wobei der zu der mindestens einen Aufzeichnung gehörende Berichte der historischen Daten und/oder der zu der mindestens einen Aufzeichnung gehörende Alarm eine graphische Darstellung enthält, die eine Belegungslandkarte und/oder eine Hitzeverteilungskarte und/oder ein zeitliches Netz und/oder einen Graphen und/oder ein Streudiagramm enthält.

7. System (112, 114, 300, 606) nach Anspruch 1, wobei die Mehrzahl von Beleuchtungskörper (600) in der Umgebung eine erste räumliche Auflösung von Beleuchtungskörpern (600) in Form einer Menge von Beleuchtungskörpern pro Fläche aufweisen, und die Mehrzahl von Sensoren (302, 602, 702, 704) eine zweite räumliche Auflösung von Sensoren (302, 602, 702, 704) in Form einer Menge von Sensoren pro Fläche aufweisen, wobei die erste räumliche Auflösung und die zweite räumliche Auflösung gleich sind.

8. System (112, 114, 300, 606) von Anspruch 1, wobei die Mehrzahl der physikalischen Standorte
- mindestens einen physikalischen Überkopf-Standort, oder
- mindestens eine Arbeitshöhe an einem physikalischen Ort umfasst.

9. System (112, 114, 300, 606) nach Anspruch 1, wobei die Mehrzahl der elektrischen Verbindungen einen Draht und/oder ein Kabel und/oder einen Kabelkanal und/oder eine Stromschiene und/oder eine Sammelschiene und/oder eine Bus-Führung und/oder einen Anschlusskasten und/oder einen Leistungsmesser umfasst.

10. System (112, 114, 300, 606) nach Anspruch 1, wobei die Mehrzahl von Netzwerkverbindungen eine drahtgebundene und/oder eine drahtlose Verbindung umfasst.

11. System (112, 114, 300, 606) nach Anspruch 1, wobei das erste Netzwerk ein Punkt-zu-Punkt-Netzwerk und/oder ein Bus-Netzwerk und/oder ein Stern-Netzwerk und/oder ein Ring-Netzwerk und/oder ein Maschen-Netzwerk und/oder ein Baum-Netzwerk und/oder ein Hybrid-Netzwerk und/oder ein Daisy-Chain-Netzwerk ist.

12. Verfahren zum Überwachen einer Umgebung, wobei das Verfahren umfasst:
Bereitstellen einer Mehrzahl von Sensoren (302, 602, 702, 704),
wobei jeder Sensor (302, 602, 702, 704) der Mehrzahl von Sensoren (302, 602, 702, 704) betreibbar ist, um mindestens eine Änderung in mindestens einem Teil der Umgebung zu erfassen;
wobei die Mehrzahl von Sensoren (302, 602, 702, 704) mindestens einen Sensor (302, 602, 702, 704) enthält, der
mechanisch mit mindestens einem Beleuchtungskörper einer Mehrzahl von Beleuchtungskörpern (600) verbunden ist, so dass der mindestens eine Sensor und der mindestens eine Beleuchtungskörper denselben physikalischen Ort der Mehrzahl von physikalischen Orten teilen, die in der Umgebung für die Mehrzahl von Beleuchtungskörpern (600) vorgesehen sind; und/oder
elektrisch mit mindestens einem Beleuchtungskörper der Mehrzahl von Beleuchtungskörpern (600) verbunden ist, so dass der mindestens eine Sensor und der mindestens eine Beleuchtungskörper dieselbe elektrische Verbindung der Mehrzahl von elektrischen Verbindungen zur Stromversorgung der Mehrzahl von Beleuchtungskörpern (600) teilen; und/oder
kommunikativ mit mindestens einem Beleuchtungskörper der Mehrzahl von Beleuchtungskörpern (600) verbunden ist, so dass der mindestens eine Sensor und der mindestens eine Beleuchtungskörper dieselbe Netzwerkverbindung der Mehrzahl von Netzwerkverbindungen teilen, um Daten über das erste Netzwerk auszutauschen;
Verwendung einer bestehenden Infrastruktur, umfassend:
eine Mehrzahl von physischen Orten, die in der Umgebung für die Mehrzahl von Beleuchtungskörpern (600) vorgesehen sind, und/oder
eine elektrische Stromversorgung, die eine Mehrzahl von elektrischen Verbindungen für die Stromversorgung der Mehrzahl von Beleuchtungskörpern (600) enthält, und/oder
ein erstes Netzwerk, das eine Mehrzahl von Netzwerkverbindungen zum Datenaustausch mit der Mehrzahl von Beleuchtungskörpern (600) aufweist;
Überwachen der Mehrzahl von Sensoren (302, 602, 702, 704) auf mindestens eine Änderung in mindestens einem Teil der Umgebung;
Speichern mindestens einer Aufzeichnung der mindestens einen von mindestens einem Sensor (302, 602, 702, 704) der Mehrzahl von Sensoren (302, 602, 702, 704) erfassten Änderung in dem mindestens einen Teil der Umgebung, wobei die mindestens eine Aufzeichnung mindestens einen Zeitstempel enthält, der mindestens eine Zeitmessung angibt, die zu der mindestens einen Änderung in dem mindestens einen Teil der Umgebung gehört, und mindestens einen Ortsstempel enthält, der mindestens einen physikalischen Ort des mindestens einen Sensors (302, 602, 702, 704) angibt; und
Bereitstellen mindestens einer von einem Benutzer vordefinierten Regel, wobei die mindestens eine Regel mindestens eine Reaktion auf die mindestens eine Änderung in dem mindestens einen Teil der Umgebung auf der Grundlage historischer Informationen und maschinellen Lernens regelt;
Erzeugen mindestens einer Antwort auf die mindestens eine Änderung in dem mindestens einen Teil der Umgebung
**dadurch gekennzeichnet, dass** die Antwort auf der Grundlage der mindestens einen Aufzeichnung und der mindestens einen Regel basiert, wobei die mindestens eine Antwort
eine graphische Darstellung der zu der mindestens einen Aufzeichnung gehörenden historischen Daten, und/oder
eine zu der mindestens einen Aufzeichnung gehörende Warnung, und/oder
ein digitales Steuersignal zur Steuerung mindestens eines Beleuchtungskörpers (600) aus der Mehrzahl von Beleuchtungskörpern (600), und/oder
eine Änderung der mindestens einen Regel umfasst.

13. System (112, 114, 300, 606) nach Anspruch 1, konfiguriert für die Verfolgung von Objekten und/oder Personen in der Umgebung,
wobei der mindestens eine Speicher (312) konfiguriert ist, um Aufzeichnungen von Änderungen des Vorhandenseins oder des Nichtvorhandenseins des mindestens einen Objekts oder der Person, wie sie von der Mehrzahl von Sensoren (302, 602, 702, 704) erfasst werden, zu speichern, wobei jede der Aufzeichnungen einen Zeitstempel enthält, der eine Zeitmessung angibt, die zu einer Änderung gehört, und einen Ortsstempel enthält, der einen physikalischen Ort eines Sensors (302, 602, 702, 704) angibt, der die Änderung erfasst; und
wobei der mindestens eine Prozessor konfiguriert ist, um eine Antwort durch das System (112, 114, 300, 606) auf die mindestens eine Änderung des Vorhandenseins oder der Abwesenheit des Objekts und/oder der Person in dem mindestens einen Teil der Umgebung auf der Grundlage von mindestens einer Aufzeichnung von mindestens einer Änderung zu erzeugen.

14. System (112, 114, 300, 606) nach Anspruch 13, wobei das System konfiguriert ist, um eine Identifizierung und/oder einen Ort und/oder eine Bewegung und/oder eine Dichte und/oder eine Verteilung und/oder ein Muster des Objekts und/oder der Person in der Umgebung zu verfolgen.

15. System (112, 114, 300, 606) nach Anspruch 14, wobei das System ferner zur Sicherheitsüberwachung und/oder zur Suche und Rettung und/oder zur Bestandsverwaltung und/oder zur Marketingforschung und/oder zur Raumnutzung konfiguriert ist.

## Revendications

1. Système (112, 114, 300, 606) de surveillance d'un environnement, le système comportant :
une pluralité d'appareils (600) d'éclairage dans l'environnement ;
une infrastructure existante comprenant au moins un élément parmi :
une pluralité d'emplacements physiques aménagés dans l'environnement pour la pluralité d'appareils (600) d'éclairage ;
une alimentation électrique comprenant une pluralité de branchements électriques servant à alimenter la pluralité d'appareils (600) d'éclairage ; et
un premier réseau comprenant une pluralité de connexions de réseau servant à échanger des données avec la pluralité d'appareils (600) d'éclairage,
une pluralité de capteurs (302, 602, 702, 704),
chaque capteur (302, 602, 702, 704) de la pluralité de capteurs (302, 602, 702, 704) étant exploitable pour détecter au moins un changement dans au moins une partie de l'environnement ; et
la pluralité de capteurs (302, 602, 702, 704) comprenant au moins un capteur
lié mécaniquement à au moins un appareil d'éclairage de la pluralité d'appareils (600) d'éclairage de telle façon que le ou les capteurs et l'appareil ou les appareils d'éclairage partagent le même emplacement physique de la pluralité d'emplacements physiques aménagés dans l'environnement pour la pluralité d'appareils (600) d'éclairage ; et/ou
relié électriquement à au moins un appareil d'éclairage de la pluralité d'appareils (600) d'éclairage de telle façon que le ou les capteurs et l'appareil ou les appareils d'éclairage partagent le même branchement électrique de la pluralité de branchements électriques servant à alimenter la pluralité d'appareils (600) d'éclairage ; et/ou
relié de façon communicative à au moins un appareil d'éclairage de la pluralité d'appareils (600) d'éclairage de telle façon que le ou les capteurs et l'appareil ou les appareils d'éclairage partagent la même connexion de réseau de la pluralité de connexions de réseau servant à échanger des données sur le premier réseau ;
au moins une mémoire (312) configurée pour stocker
au moins un enregistrement de chaque changement dans la ou les parties de l'environnement détecté par chaque capteur (302, 602, 702, 704) de la pluralité de capteurs (302, 602, 702, 704), l'enregistrement ou les enregistrements comprenant une estampille temporelle indiquant une mesure de temps associée au changement dans la ou les parties de l'environnement et une estampille de lieu indiquant un emplacement physique du capteur (302, 602, 702, 704) correspondant ; et
au moins une règle prédéfinie par un utilisateur, la ou les règles régissant au moins une réponse par le système à au moins un changement dans au moins une partie de l'environnement d'après des informations historiques et un apprentissage automatique ;
au moins un processeur (304) relié de façon communicative à la pluralité de capteurs (302, 602, 702, 704) et à la ou aux mémoires (312), le ou les processeurs étant configurés pour :
surveiller la pluralité de capteurs (302, 602, 702, 704) pour déceler au moins un changement dans la ou les parties de l'environnement ;
générer au moins une réponse par le système (112, 114, 300, 606) au(x) changement(s) dans la ou les parties de l'environnement, **caractérisé en ce que** ladite réponse est basée sur l'enregistrement ou les enregistrements du ou des changements et la ou les règles, la ou les réponses comprenant au moins un élément parmi :
un compte rendu des données historiques associées à l'enregistrement ou aux enregistrements ;
une alerte associée à l'enregistrement ou aux enregistrements ;
un signal numérique de commande servant à commander au moins un appareil (600) d'éclairage de la pluralité d'appareils (600) d'éclairage ; et
une modification de la ou des règles.

2. Système (112, 114, 300, 606) selon la revendication 1, le signal numérique de commande commandant l'appareil ou les appareils (600) d'éclairage de la pluralité d'appareils (600) d'éclairage pour effectuer au moins une des actions consistant à :
activer l'appareil ou les appareils (600) d'éclairage ;
désactiver l'appareil ou les appareils (600) d'éclairage ;
allumer par éclairs l'appareil ou les appareils (600) d'éclairage ;
sélectionner un niveau de lumière d'une lumière visible délivrée par l'appareil ou les appareils (600) d'éclairage ;
sélectionner une température de couleur d'une lumière visible délivrée par l'appareil ou les appareils (600) d'éclairage ;
délivrer une lumière non visible avec l'appareil ou les appareils (600) d'éclairage ; et
fournir des indices de direction à l'aide de l'appareil ou des appareils (600) d'éclairage.

3. Système (112, 114, 300, 606) selon la revendication 2, la température de couleur sélectionnée de la lumière visible étant rouge.

4. Système (112, 114, 300, 606) selon la revendication 2, la lumière non visible comprenant une lumière infrarouge.

5. Système (112, 114, 300, 606) selon la revendication 1, la pluralité de capteurs (302, 602, 702, 704) comprenant
- au moins un capteur parmi un capteur infrarouge actif, un capteur infrarouge passif, un capteur de micro-ondes, un dispositif radar, un dispositif lidar, un photomètre, un radiomètre, un capteur (702) de lumière ambiante, un appareil photo numérique, une caméra thermographique, un récepteur de balise électrique et un lecteur de puce d'identification par radiofréquences, RFID, ou
- au moins un capteur parmi un microphone, un dispositif sonar, un sismographe, un capteur d'ultrasons, un capteur (704) de température, un capteur d'humidité, un capteur chimique, un détecteur de fumée et un détecteur de matières particulaires.

6. Système (112, 114, 300, 606) selon la revendication 1, au moins un élément parmi le compte rendu des données historiques associées à l'enregistrement ou aux enregistrements et l'alerte associée à l'enregistrement ou aux enregistrements comprenant une représentation graphique, la représentation graphique comprenant au moins un élément parmi une carte d'occupation, une carte thermique, une grille temporelle, un graphe, et un diagramme de dispersion.

7. Système (112, 114, 300, 606) selon la revendication 1, la pluralité d'appareils (600) d'éclairage dans l'environnement présentant une première résolution spatiale d'appareils (600) d'éclairage en termes de quantité d'appareils d'éclairage rapportée à une aire, et la pluralité de capteurs (302, 602, 702, 704) présentant une seconde résolution spatiale de capteurs (302, 602, 702, 704) en termes de quantité de capteurs rapportée à l'aire, la première résolution spatiale et la seconde résolution spatiale étant les mêmes.

8. Système (112, 114, 300, 606) selon la revendication 1, la pluralité d'emplacements physiques comprenant
- au moins un emplacement physique au plafond, ou
- au moins un emplacement physique à hauteur de travail.

9. Système (112, 114, 300, 606) selon la revendication 1, la pluralité de branchements électriques comprenant au moins un élément parmi un fil, un câble, un chemin de câbles, une barre omnibus, une canalisation omnibus, une boîte de jonction, et un wattmètre.

10. Système (112, 114, 300, 606) selon la revendication 1, la pluralité de connexions de réseau comprenant une connexion filaire et/ou une connexion sans fil.

11. Système (112, 114, 300, 606) selon la revendication 1, le premier réseau étant au moins un réseau parmi un réseau point à point, un réseau en bus, un réseau en étoile, un réseau en anneau, un réseau à mailles, un réseau en arbre, un réseau hybride, et un réseau en marguerite.

12. Procédé de surveillance d'un environnement, le procédé comportant les étapes consistant à :
mettre en place une pluralité de capteurs (302, 602, 702, 704),
chaque capteur (302, 602, 702, 704) de la pluralité de capteurs (302, 602, 702, 704) étant exploitable pour détecter au moins un changement dans au moins une partie de l'environnement ;
la pluralité de capteurs (302, 602, 702, 704) comprenant au moins un capteur
lié mécaniquement à au moins un appareil d'éclairage d'une pluralité d'appareils (600) d'éclairage de telle façon que le ou les capteurs et l'appareil ou les appareils d'éclairage partagent le même emplacement physique de la pluralité d'emplacements physiques aménagés dans l'environnement pour la pluralité d'appareils (600) d'éclairage ; et/ou
relié électriquement à au moins un appareil d'éclairage de la pluralité d'appareils (600) d'éclairage de telle façon que le ou les capteurs et l'appareil ou les appareils d'éclairage partagent le même branchement électrique de la pluralité de branchements électriques servant à alimenter la pluralité d'appareils (600) d'éclairage ; et/ou
relié de façon communicative à au moins un appareil d'éclairage de la pluralité d'appareils (600) d'éclairage de telle façon que le ou les capteurs et l'appareil ou les appareils d'éclairage partagent la même connexion de réseau de la pluralité de connexions de réseau servant à échanger des données sur le premier réseau ;
à l'aide d'une infrastructure existante comprenant au moins un élément parmi :
une pluralité d'emplacements physiques aménagés dans l'environnement pour la pluralité d'appareils (600) d'éclairage ;
une alimentation électrique comprenant une pluralité de branchements électriques servant à alimenter la pluralité d'appareils (600) d'éclairage ; et
un premier réseau comprenant une pluralité de connexions de réseau servant à échanger des données avec la pluralité d'appareils (600) d'éclairage, surveiller la pluralité de capteurs (302, 602, 702, 704) pour déceler au moins un changement dans la ou les parties de l'environnement ;
stocker au moins un enregistrement du ou des changements dans la ou les parties de l'environnement détectés par au moins un capteur (302, 602, 702, 704) de la pluralité de capteurs (302, 602, 702, 704), l'enregistrement ou les enregistrements comprenant au moins une estampille temporelle indiquant au moins une mesure de temps associée au(x) changement(s) dans la ou les parties de l'environnement et au moins une estampille de lieu indiquant au moins un emplacement physique du ou des capteurs (302, 602, 702, 704) ; et
mettre en place au moins une règle prédéfinie par un utilisateur, la ou les règles régissant au moins une réponse au(x) changement(s) dans la ou les parties de l'environnement d'après des informations historiques et un apprentissage automatique ;
générer au moins une réponse au(x) changement(s) dans la ou les parties de l'environnement, **caractérisé en ce que** ladite réponse est basée sur l'enregistrement ou les enregistrements et la ou les règles, la ou les réponses comprenant au moins un élément parmi :
une représentation graphique des données historiques associées à l'enregistrement ou aux enregistrements ;
une alerte associée à l'enregistrement ou aux enregistrements ; et
un signal numérique de commande servant à commander au moins un appareil (600) d'éclairage de la pluralité d'appareils (600) d'éclairage ; et
une modification de la ou des règles.

13. Système (112, 114, 300, 606) selon la revendication 1, configuré pour suivre au moins des objets et/ou des individus dans ledit environnement,
la ou les mémoires (312) étant configurées pour stocker des enregistrements de changements dans la présence ou l'absence de l'objet et/ou de l'individu tels que détectés par la pluralité de capteurs (302, 602, 702, 704), chacun des enregistrements comprenant une estampille temporelle indiquant une mesure de temps associée à un changement et une estampille de lieu indiquant un emplacement physique d'un capteur (302, 602, 702, 704) détectant le changement ; et
le ou les processeurs étant configurés pour générer une réponse par le système (112, 114, 300, 606) au(x) changement(s) dans la présence ou l'absence de l'objet et/ou de l'individu dans la ou les parties de l'environnement d'après au moins un enregistrement d'au moins un changement.

14. Système (112, 114, 300, 606) selon la revendication 13, le système étant configuré pour suivre au moins un aspect parmi une identification, un emplacement, un mouvement, une densité, une répartition et un schéma de l'objet et/ou de l'individu dans l'environnement.

15. Système (112, 114, 300, 606) selon la revendication 14, le système étant en outre configuré pour au moins une fonction parmi la surveillance de sécurité, la recherche et le sauvetage, la gestion de stocks, les études de commercialisation, et l'utilisation de l'espace.
